(19) **Europäisches Patentamt**

**European Patent Office**

**Office européen des brevets**

(11) Veröffentlichungsnummer: **0 270 621 B1**

(12) **EUROPÄISCHE PATENTSCHRIFT**

(45) Veröffentlichungstag der Patentschrift: **25.11.92**

(51) Int. Cl.⁵: **B65D 41/34**

(21) Anmeldenummer: **87903851.1**

(22) Anmeldetag: **09.06.87**

(86) Internationale Anmeldenummer:
**PCT/DE87/00269**

(87) Internationale Veröffentlichungsnummer:
**WO 87/07584 (17.12.87 87/28)**

(54) **GARANTIEVERSCHLUSS.**

(30) Priorität: **09.06.86 DE 3619335**
**20.08.86 DE 3628267**

(43) Veröffentlichungstag der Anmeldung:
**15.06.88 Patentblatt 88/24**

(45) Bekanntmachung des Hinweises auf die
Patenterteilung:
**25.11.92 Patentblatt 92/48**

(84) Benannte Vertragsstaaten:
**AT BE CH DE FR GB IT LI LU NL SE**

(56) Entgegenhaltungen:
**EP-A- 0 049 876       EP-A- 0 117 104**
**EP-A- 0 158 477       WO-A-83/03809**
**FR-A- 1 213 931       US-A- 4 402 418**
**US-A- 4 478 343**

(73) Patentinhaber: **Barein, Norbert**
**Volksgartenstrasse 198 Postfach 1118**
**W-4050 Mönchengladbach 1(DE)**

(72) Erfinder: **Barein, Norbert**
**Volksgartenstrasse 198 Postfach 1118**
**W-4050 Mönchengladbach 1(DE)**

Rank Xerox (UK) Business Services

**Beschreibung**

Die Erfindung bezieht sich auf einen Garantieverschluß für Behälter wie Kanister, Flaschen oder dgl. aus Kunststoff, Glas usw., insbesondere Mehrwegflaschen, deren Hals mit einem Schraubgewinde und unterhalb des Schraubgewindes angeordnetem ringförmigen Vorsprung, insbesondere Transferring versehen ist. Garantieverschlüsse haben den Zweck, kenntlich zu machen, daß der Behälter geöffnet wurde, d.h. durch die Unversehrtheit des gesamten Garantieverschlusses wird dem Konsumenten der Originalinhalt des Behälters garantiert. Auf die hinreichend bekannte Wichtigkeit und Bedeutung derartiger Garantieverschlüsse für den Verbraucher braucht an dieser Stelle nicht weiter eingegangen zu werden.

Es handelt sich um einen Garantieverschluß mit einer auf einen mit einem Gegengewinde versehenen Behälterhals aufschraubbaren, mit einem komplementär zum Gegengewinde des Behälterhalses angeordneten Innengewinde und mit einem zur Abdichtung der Behältermündung vorgesehenen, ggf. gesondert ausgebildeten Dichtmittel versehenen Verschlußkappe und mit einem an die Verschlußkappe nach unten anschließenden, mindestens abschnittsweise von der Verschlußkappe abreißbar vorgesehenen und/oder aufreißbar ausgestalteten Sicherheitsring und mit mindestens einem an einen unteren Endbereich des Sicherheitsringes über eine Filmscharnierverbindung nach unten anschließenden, zwecks Untergreifens des unterhalb des Gegengewindes angeordneten Transferrings des Behälterhalses nach innen einschwenkbaren Verriegelungsansatz. Dabei wird durch mindestens einen Abstandhalter mindestens eine Anlageeinrichtung gebildet, über welche der jeweilige Verriegelungsansatz in der nach innen eingeschwenkten Stellung gegen den Sicherheitsring abgestützt ist.

Eine Anlageeinrichtung ist bereits durch die US-A-4478343 bekannt geworden, welche Anlageeinrichtung dadurch gebildet wird, daß dessen Verriegelungsansatz gegen die untere Kante dessen Sicherheitsrings abgestützt ist ("Y"). Dabei wird, wie "Y" zeigt, ein besonders langes und dickes Scharnier um diese untere Kante dessen Sicherheitsrings gewunden. Das hat unter anderem den Nachteil, daß bei der mechanischen Verschraubung (Verkappung) ein besonders großer Widerstand entgegengesetzt wird. Der erfindungsgemäße Garantieverschluß unterscheidet sich von dem Garantieverschluß der US-A-4478343 dadurch, daß die Abstützung oberhalb der Filmscharnierverbindung erfolgt und in einem -bezogen auf die Höhe des Verriegelungsansatzes- wesentlichen Abstand von der Filmscharnierverbindung endet. Der Widerstand, den der jeweilige Verriegelungsansatz dadurch bei der Abstützung gegen den Sicherheitsring entgegensetzt, ist wesentlich größer als bei der durch die US-A-4478343 bekannt gewordenen Anlageeinrichtung. Dadurch wird ein großer Gegenhalt des jeweiligen Verriegelungsansatzes unterhalb des Transferrings des Behälterhalses erzielt.

Die Filmscharnierverbindung kann entsprechend kurz und dünn sein, da sie nicht wie bei der US-A-4478343 um eine Kante des Sicherheitsringes gewunden werden muß ("Y"). Dadurch wird erfindungsgemäß darüber hinaus ein hervorragender Schnappeffekt erzielt. In der nach innen eingeschwenkten Stellung des jeweiligen Verriegelungsansatzes weicht dieser während des mechanischen Schraubvorganges (d.h. des Schraubvorganges durch automatisch arbeitende Verschließmaschinen (Verkappung)) oberhalb der Anlageeinrichtung nachgiebig aus. In Verbindung mit einer kurzen Höhe der Filmscharnierverbindung (welche nicht um eine Kante des Sicherheitsringes gewunden werden muß und in welcher dadurch keine zusätzlichen Spannungen auftreten) wird trotz der zuvor beschriebenen Nachgiebigkeit des jeweiligen Verriegelungsansatzes oberhalb der Anlageeinrichtung ein großer Gegenhalt unterhalb des Transferrings des Behälterhalses erzielt und die Verwendung herkömmlicher Schließköpfe für die Verschließmaschinen ermöglicht. Ferner sind auch die Sollbruchstellen durch das leichte Übergleiten über den Behälterhals keiner so großen Belastung ausgesetzt und können dementsprechend dünn ausgebildet sein, so daß einerseits der notwendige Kraftaufwand des Konsumenten zum Öffnen des Behälters entsprechend niedrig ist und andererseits bei der Verarbeitung der Garantieverschlüsse auf automatischen, mit hoher Betriebsgeschwindigkeit arbeitenden Verschließanlagen die Sollbruchstellen dieser Belastung standhalten.

Anhand der nachstehend aufgezeigten schaubildlichen Darstellungen ist der erfindungsgemäße Garantieverschluß zeichnerisch dargestellt.

Es zeigen:

Fig. 1      eine Seitenansicht des oberen in den mit Pilferproof-Gewinde und Transferring versehenen Flaschenhals übergehenden Teiles einer Flasche,

Fig. 2      eine perspektivische Ansicht einer Ausführungsform des Garantieverschlusses,

Fig. 3      einen Längsschnitt des Garantieverschlusses entlang der Linie 3 - 3 nach Fig. 2 in vergrößerter Darstellung,

Fig. 4      einen Längsschnitt des Garantieverschlusses nach Fig. 3 und eine vergrößerte Seitenansicht der Flasche nach Fig. 1 in einer auf den Flaschenhals aufgeschraubten Verriegelungsstellung des Garantieverschlusses relativ zur Flasche,

| Fig. 5 | einen von dem Längsschnitt des Garantieverschlusses nach Fig. 3 sich durch eine Darstellung des Garantieverschlusses in der Herstellungsstellung unterscheidenden Längsschnitt des Garantieverschlusses, |
| Fig. 6 bis 8 | ähnliche Darstellungen wie Fig. 5, jedoch in bezug auf andere Ausführungsformen des Garantieverschlusses und als Teil-Längsschnitte des Garantieverschlusses in vergrößerten Darstellungen, |
| Fig. 9 | eine perspektivische Draufsicht auf die Verriegelungsflanken einer Ausführungsform des Garantieverschlusses nach Fig. 2 in vergrößerter Darstellung, |
| Fig. 10 | eben Längsschnitt des Garantieverschlusses in der Herstellungsstellung nach Fig. 5, jedoch in einer Lage mit nach oben gerichteter Mündung des Garantieverschlusses und einen durch die Längsmittelachse des Stempels und die Mitte in Umfangsrichtung zweier diametral einander gegenüberliegender Segmente des Stempels verlaufenden Längsschnitt des Stempels in einer dem Beginn des relativen Umklappvorganges der Verriegelungsansätze aus der Herstellungsstellung in die Verriegelungsstellung entsprechenden Lage relativ zwischen Garantieverschluß und Stempel, |
| Fig. 11 | eine Ausschnittsvergrößerung innerhalb des strichpunktierten Kreises X - X in Fig. 10, jedoch in einer um 15° im Uhrzeigersinn in Umfangsrichtung gedrehten (siehe Fig. 12) Lage des ohne Garantieverschluß dargestellten Stempels, |
| Fig. 12 | einen Teil-Querschnitt des ohne Garantieverschluß dargestellten Stempels entlang der Linie 12 - 12 nach Fig. 10, |
| Fig. 13 bis 15 | ähnliche Darstellungen wie Fig. 11, jedoch in bezug auf andere Ausführungsformen des Stempels in verkleinerten Darstellungen. |

Der Garantieverschluß 1 kann für jegliche Art von Behältern verschiedener Größe, beispielsweise Kanister, Tuben, Flaschen oder dgl. aus Kunststoff, Blech, Aluminium, Glas usw., insbesondere Mehrwegflaschen vorgesehen sein, deren Hals mit einem Schraubgewinde und unterhalb des Schraubgewindes angeordnetem ringförmigen Vorsprung, insbesondere Transferring 42 versehen ist, vorgesehen sein.

Im weiteren Verlauf der Ausführungen wird der Einfachheit halber, da es sich bei den in den Ausführungen besprochenen Behältern insbesondere um Mehrwegflaschen aus Glas handelt, nur noch von "Flaschen" 39 gesprochen. Gleichfalls eignet sich der neuerungsgemäße Garantieverschluß 1 für beliebige Behälter (zeichnerisch nicht dargestellt). Es handelt sich bei den in den Ausführungen beschriebenen Flaschen 39 insbesondere um Glasflaschen (Getränkeflaschen) mit kurzgängigem Außengewinde und unterhalb des Außengewindes angeordnetem ringförmigen Vorsprung. Derartige Gewinde sind unter dem Namen "Pilferproof -Gewinde" und der unterhalb des Außengewindes angeordnete ringförmige Vorsprung unter der Bezeichnung "Transferring" bekannt. Der neuerungsgemäße Garantieverschluß 1 eignet sich für jedes Schraubgewinde mit unterhalb des Gewindeendes angeordnetem vorzugsweise ringförmigen Vorsprung, insbesondere Transferring 42 . Als "Ausführungen" werden die Beschreibung und die Patentansprüche bezeichnet. Die Verschlußkappe 2 ist mit einem zur Abdichtung der Mündung der Flasche 39 vorgesehenen Dichtmittel z.B. 8 versehen. Als Dichtmittel können alle an sich bekannten Möglichkeiten zur Abdichtung der Mündung einer Flasche 39 dienen. Beispielsweise kann eine in den Garantieverschluß 1 eingelegte, ggf. festgeklebte oder anderweitig mit ihm befestigte Dichtungseinlage z.B. 8 als Dichtmittel vorgesehen sein. Das Dichtmittel kann aber auch einstückig aus der Innenfläche der oberen Wand 6 , beispielsweise i.F.e. Stopfens (zeichnerisch nicht dargestellt) oder ringförmiger Dichtlippe (zeichnerisch nicht dargestellt) herausgebildet sein. Darüber hinaus besteht auch die Möglichkeit, daß das Dichtmittel aus einer eingespritzten oder eingetropften, zunächst flüssigen und später trocknender oder getrockneter Dichtmasse (z.B. PVC) (Compound) besteht. Hier sind Verfahren wie das Einstempeln, das Rotieren,d.h. die flüssige Dichtmasse wird durch den Schleudervorgang verteilt, das Rotieren i.V.m. Microwellentrocknung usw. bekannt. Ferner kann jede andere bekannte Art der Ausbildung eines Dichtmittels vorgesehen sein.

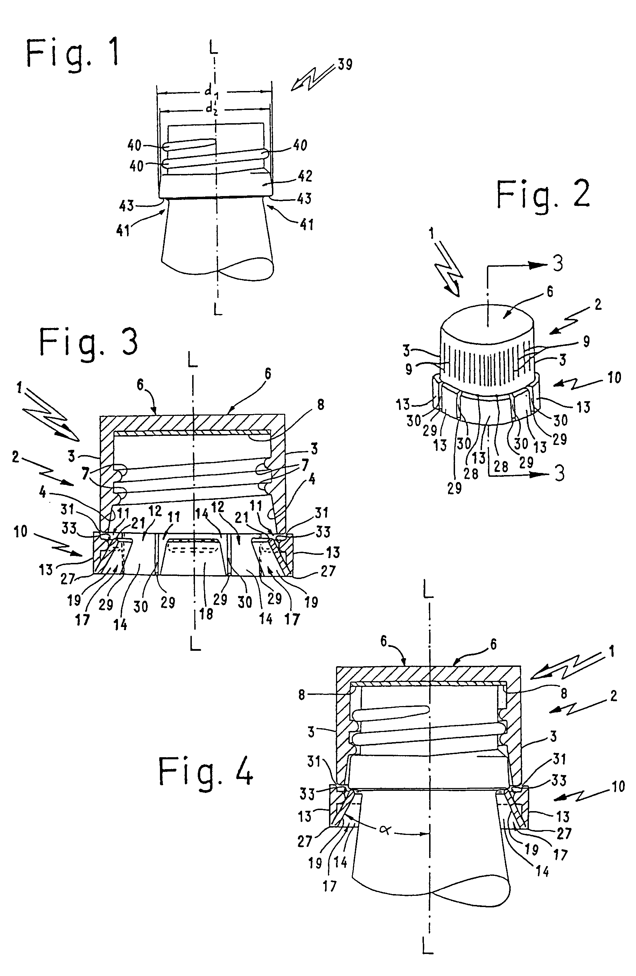

Der Innendurchmesser des Sicherheitsrings 10 kann gleich oder ungefähr gleich dem Aussendurchmesser der Verschlußkappe 2 sein (vgl. z.B. Fig. 3 bis 5). Beispielsweise kann der Innendurchmesser des Sicherheitsrings 10 geringfügig kleiner, insbesondere geringfügig größer als der Außendurchmesser der Verschlußkappe 2 sein. Zur Herstellung des neuen Garantieverschlusses 1 wird keine kompliziertes Werkzeug, das sich radial öffnet, sog. Backenwerkzeug, sondern lediglich ein einfaches, den Ausstoß des Kunststoffspritzgußteiles in Axialrichtung gewährleistendes Werkzeug, sog. Axialwerkzeug, benötigt.

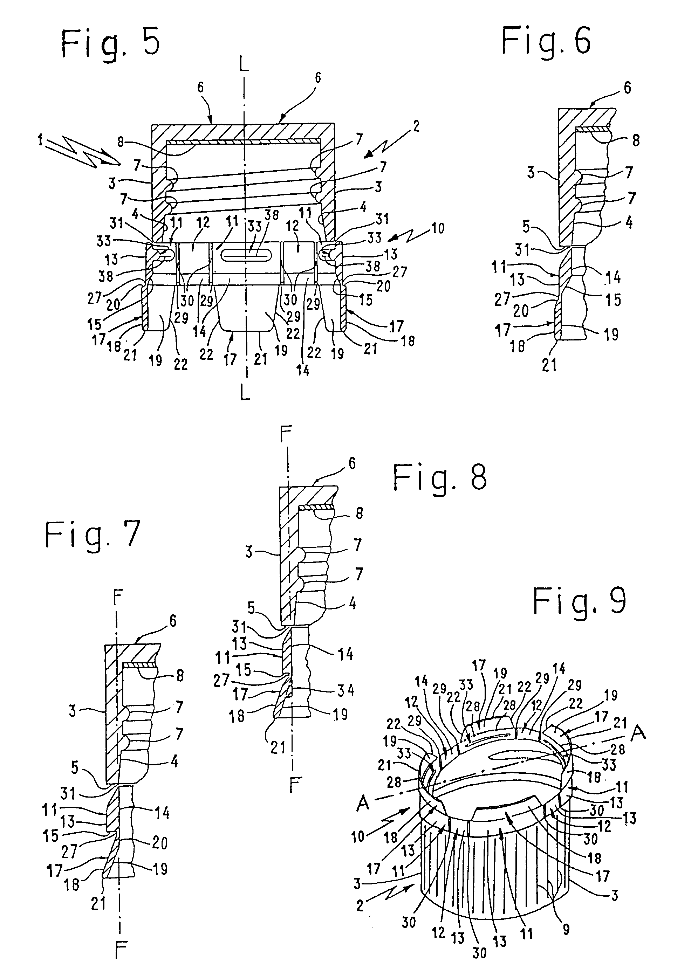

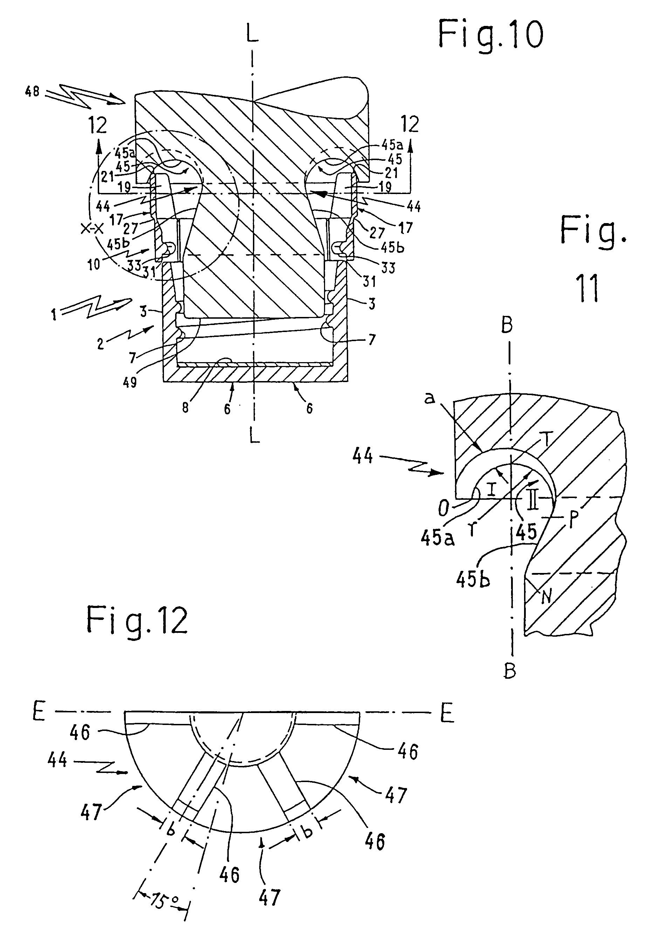

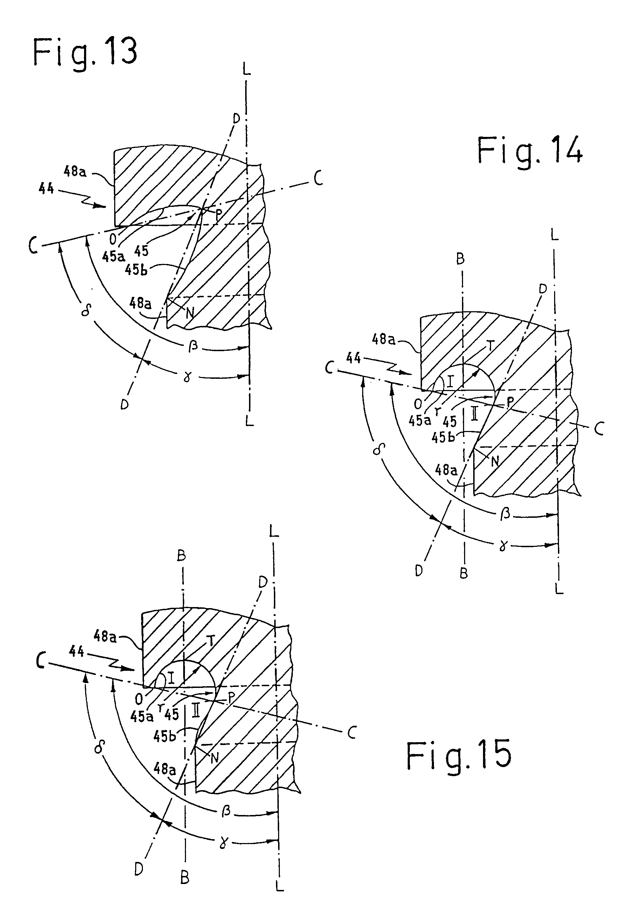

Der Garantieverschluß 1 kann zylindrisch ausgebildet sein. Der Garantieverschluß 1 (Verschlußkappe 2 und/oder Sicherheitsring 10) kann höhenmäßig mindestens abschnittsweise konisch, kegelstumpfförmig usw. ausgebildet sein. Die Verschlußkappe 2 weist vorzugsweise auf ihrer Mantelaußenfläche 3 Griffrippen 9 auf. Der Sicherheitsring 10 kann einen in sich geschlossenen Ring bilden (zeichnerisch nicht dargestellt). Hinsichtlich des Garantieverschlusses 1 mit einem derartigen als in sich geschlossenen Ring ausgebildeten Sicherheitsring 10 (zeichnerisch nicht dargestellt) ist festzustellen, daß nach dem erstmaligen Aufschrauben (Lösen) des Garantieverschlusses 1 relativ von der Flasche 39 ein derartiger in sich geschlossener Ring unterhalb des Transferrings 42 verbleibt und bei Mehrwegflaschen vor deren Neufüllung in einem speziellen Arbeitsgang entfernt werden muß. Die Eingliederung eines derartigen speziellen Arbeitsganges im den Takt der Füllstraße ist aufwendig, zeitraubend und überflüssig, zumal es überdies ohne Mehraufwand möglich ist, den Sicherheitsring in der beschriebenen Weise so auszubilden, daß er an der Verschlußkappe 2 und nicht am Hals 41 der Flasche 39 verbleibt. Hierzu kann der Sicherheitsring 10 einen Schlitz 30 aufweisen. Der Sicherheitsring 10 kann aber auch zwischen mehreren Schlitzen 30 Abschnitte 11 herausbilden. Es würde den Rahmen der Ausführungen sprengen, alle Ausführungsformen möglicher Sicherheitsring-Ausbildungen aufzuzählen, deshalb erfolgt an dieser Stelle der Hinweis, daß alle an sich bekannten Ansführungsmöglichkeiten möglicher Sicherheitsring-Ausbildung im Rahmen der Erfindung beinhaltet sind, auch wenn in den Ausführungen aus den zuvor genannten Gründen im einzelnen nicht weiter darauf eingegangen wird. Die Verriegelungsansätze 17 dienen dazu, den Garantieverschluß 1 auf der Flasche 39 derart zu befestigen, daß ein Aufschrauben (Lösen) des Garantieverschlusses 1 relativ von der Flasche 39 ohne mindestens teilweise Abtrennung des Sicherheitsrings 10 von der Verschlußkappe 2 und/oder ohne deutlich sichtbare Beschädigung des Sicherheitsringes 10 verhindert wird. Je größer die nach oben wirkende Kraft (Hubkraft) wird, desto größer wird die zusätzliche Verriegelungswirkung und damit auch die Manipulationssicherheit. Dabei ist bevorzugt je Verriegelungsansatz 17 dessen Teilumfang so bemessen und dieser so ausgebildet, am Sicherheitsring 10 angeordnet usw., daß er zwischen zwei definierten Endstellungen (der Herstellungsstellung und der Verriegelungsstellung) unter Erzeugung eines ausreichenden Schwenkwiderstandes über einen Totpunkt hinweg verschwenkbar seine in der Herstellungsstellung ihm vorgegebene Wölbungsrichtung umkehrt. Wenn in den Ausführungen von der Herstellungsstellung die Rede ist, so ist damit die Stellung der Verriegelungsansansätze 17 relativ zum Sicherheitsring 10 gemeint, in welcher der Garantieverschluß 1 hergestellt wird. Wenn in den Ausführungen von der Verriegelungsstellung die Rede ist, so ist damit die Stellung der Verriegelungsansätze 17 relativ zum Sicherheitsring 10 gemeint, in welcher diese nach innen eingeschlagen sind. Als Verriegelungsstellung wird aber auch diejenige Stellung des Garantieverschlusses 1 relativ zur Flasche 39 bezeichnet, bei welcher nach erfolgter abwärts gerichteter Axialbewegung des Garantieverschlusses 1 relativ zur Flasche 39 infolge des Schraubvorganges (Zuschrauben) dieser auf dem Flaschenhals 41 festgezogen ist, d.h. einen festen Sitz auf dem Flaschenhals 41 einnimmt, da der Garantieverschluß 1 in der nach innen geschlagenen Stellung der Verriegelungsansätze 17 in der Lage ist, die Verriegelung relativ zwischen der Flasche 39 und dem Garantieverschluß 1 durchzuführen. Ob der Garantieverschluß 1 auf die Flasche 39 aufgeschraubt oder von dieser getrennt ist, geht aus dem Zusammenhang hervor und es würde den Rahmen der Ausführungen sprengen, an jeder Stelle gesondert darauf hinzuweisen. In der Verriegelungsstellung dichtet ein Dichtmittel z.B. 8 die Entnahmeöffnung der Flasche 39 ab. Als "Schraubvorgang" wird das Zuschrauben oder das Aufschrauben (Lösen) des Garantieverschlusses 1 relativ zur Flasche 39 bezeichnet. In der Verriegelungsstellung stimmt die Längsmittelachse L - L des Garantieverschlusses 1 im Längsschnitt gesehen mit der Längsmittelachse L - L der Flasche 39 überein (vgl. z.B. Fig. 4). Beim Zusammenarbeiten des Garantieverschlusses 1 bzw. dessen Verriegelungsansätzen 17 relativ mit dem Betätigungsteil, insbesondere dem Stempel 48 stimmt im Längsschnitt gesehen die Längsmittelachse L - L des Garantieverschlusses 1 mit der Längsmittelachse des Betätigungsteils, insbesondere der Längsmittelachse L - L des Stempels 48 überein (vgl. z.B. Fig. 10). Es werden in den Ausführungen Begriffe wie z.B. "oben", "unten", "von unten nach oben", "von oben nach unten", "Steigung", "Gefälle", "von links nach rechts", "links", "rechts", "höhenmäßig" usw. gebraucht. Diese Begriffe beziehen sich auf eine Läge, wie sie eine aufrecht stehende Flasche 39 einnimmt und wie sie ein aufrecht stehender Garantieverschluß 1 einnimmt. Aufrecht stehender Garantieverschluß 1 bedeutet die Lage des Garantieverschlusses 1 , die er einnimmt, wenn er mit der Flasche 39 eine Einheit bildet, z.B. die Verriegelungsstellung nach Fig. 4 und die gleiche Lage des Garantieverschlusses 1 , wenn er von der Flasche 39 getrennt ist, z.B. die Verriegelungsstellung nach Fig. 3 oder die Herstellungsstellung nach Fig. 5 in der gleichen Lage des Garantieverschlusses 1 . Diese Begriffe beziehen sich aber auch auf eine Lage des Garantieverschlusses 1 mit seiner um 180° gedrehten Längsmittelachse L - L , d.h. mit einer nach oben gerichteten Mündung des Garantieverschlusses 1 , und die Lage, die das Betätigungsteil, insbesondere der Stempel 48 einnimmt, wenn es bzw. er relativ mit dem Garantieverschluß 1 bzw. dessen Verriegelungsansätzen 17 zusammenarbeitet (d.h. eine dem relativen Umklappvorgang der Verriegelungsansätze 17 entsprechende Lage), sowie die gleiche Lage des Betätigungsteils, insbesondere des Stempels 48 , wenn es bzw. er vom Garantieverschluß 1 getrennt ist. Eine derartige Lage des Garantieverschlusses 1 kommt immer dann in Betracht, wenn von einem relativen Zusammenarbeiten des Garantieverschlusses 1 bzw. dessen Verriegelungsansätzen 17 relativ mit dem Betätigungsteil, insbesondere dem Stempel 48 die Rede ist (vgl. z.B. Fig. 10) und ist natürlich nicht identisch mit der Lage des Garantieverschlusses 1 relativ zur Flasche 39 (vgl. z.B. Fig. 4). Die Begriffe "von links nach rechts", "links", "rechts" in bezug auf die Oberfläche 45 des Betätigungsteils, insbesondere des Stempels 48 beziehen sich auf die linke Hälfte des Längsschnitts nach z.B. Fig. 10, d.h. auf die Ausschnittsvergrößerung X - X nach z.B. Fig. 11 und z.B. die Fig. 13 bis 15, ähnliche Darstellungen wie Fig.11, jedoch in bezug auf andere Ausführungsformen des Garantieverschlusses 1 . Bei Verwendung anderer sich nicht auf eine derartige Lage des Garantieverschlusses 1 und/oder des Betätigungsteils, insbesondere des Stempels 48 beziehender Begriffe wird i.V.m. diesen Begriffen zugleich auch die jeweilige Lage des Garantieverschlusses 1 gekennzeichnet (Beispiele: in einer Draufsicht auf die Verriegelungsflanken 21 der Verriegelungsansätze 17 gesehen usw.). Falls es für wichtig gehalten wird, steht als Hinweis dafür, daß eine Ausführungsform in den Ausführungen zwar beschrieben, aber zeichnerisch nicht dargestellt ist, am jeweiligen Satzende "(zeichnerisch nicht dargestellt)" in runden Klammern. Eine Reihe in den Ausführungen beschriebener Garantieverschlußteile ist zeichnerisch nicht dargestellt. Falls es wichtig erscheint, steht zur Vermeidung von Verwechslungen unmittelbar hinter einem derartigen jeweiligen in den Ausführungen beschriebenen und zeichnerisch nicht dargestellten Garantieverschlußteil an Stelle einer Ziffer: "(zeichnerisch nicht dargestellt)" in runden Klammern. Das bedeutet nicht, daß die jeweilige Ausführungsform zeichnerisch nicht dargestellt ist, sondern daß das entsprechende Garantieverschlußteil zeichnerisch nicht dargestellt ist. Der Garantieverschluß 1 ist in Fig. 4 als Einheit mit der Flasche 39 zeichnerisch dargestellt.

Hier sind zur Übersichtlichkeit der Garantieverschluß 1 im Längsschnitt und die Flasche 39 in der Seitenansicht gezeigt. Wenn vom Garantieverschluß 1 "im Längsschnitt gesehen" gesprochen und der Garantieverschluß 1 zur in der Seitenansicht gesehenen Flasche 39 in Bezug gesetzt wird, so wird zur Vereinfachung der Ausführungen die Seitenansicht der Flasche 39 imaginär ebenfalls als entsprechender Längsschnitt angenommen. Die in den Zeichnungen dargestellte Flasche 39 ist lediglich als der obere, in den mit Pilferproof-Gewinde 40 und Transferring 42 versehenen Flaschenhals 41 übergehende Teil der Flasche 39 dargestellt, da eine Darstellung der gesamten Flasche im gleichen Maßstab zuviel Platz beanspruchen würde und nicht erforderlich ist. Der obere, in den mit Pilferproof-Gewinde 40 und Transferring 42 versehenen Flaschenhals 41 übergehende Teil der Flasche 39 steht demzufolge ersatzweise für die Flasche 39 , auch im Hinblick auf deren aufrecht stehende Lage. Hinsichtlich der Verriegelungsansätze 17 , Abschnitte 11 , als Stege ausgebildeten Abschnitte 12 ,Filmscharnierverbindungen27 usw. wird in bezug auf den Gesamtumfang vom Teilumfang gesprochen. Wenn in den Ausführungen von Durchmessern die Rede ist, beispielsweise Innendurchmesser der Verriegelungsansätze 17 , Innendurchmesser der Verriegelungsflanken 21 usw., so kann es sich bei dem Umfang, auf den sich der jeweilige Durchmesser bezieht, um einen imaginären Umfang handeln. Das ist deshalb der Fall, da beispielsweise die Verriegelungsansätze 17 nicht diametral einander gegenüber liegen müssen, sondern in Umfangsrichtung entsprechend zueinander versetzt sein können, ebenso die Verriegelungsflanken 21 usw.

Es erfolgt deshalb an dieser Stelle der Hinweis, daß sich, wenn von einem Durchmesser die Rede ist, dieser auf den entsprechenden Umfang oder imaginären Umfang beziehen kann, auch wenn zur Vereinfachung in den Ausführungen im einzelnen nicht weiter darauf eingegangen wird. Je nach Ausbildung der Verriegelungsansätze 17 betrifft die relative Zusammenarbeit des jeweiligen Verriegelungsansatzes 17 mit dem Transferring 42 der Flasche 39 bzw. der Oberfläche 45 nicht nur dessen Verriegelungsflanke 21 , sondern mehr oder weniger auch den die Verriegelungsflanke 21 umgebenden Bereich des Verriegelungsansatzes 17 . Es wird jedoch in den Ausführungen zur Vereinfachung darauf nicht weiter eingegangen. Mindestens zwei Teile des Garantieverschlusses 1 sind umfangsmäßig unregelmäßig oder insbesondere regelmäßig verteilt angeordnet und/oder untereinander ungleichförmig oder insbesondere gleichförmig ausgebildet und/oder angeordnet. Bevorzugt erstreckt sich mindestens ein Schlitz 30 über die gesamte Höhe des Sicherheitsrings 10 .

Mindestens ein Schlitz 30 kann sich über einen Teil der Höhe des Sicherheitsrings 10 erstrecken. Vorzugsweise verläuft mindestens ein Schlitz 30 axial, d.h. quer zur Umfangsrichtung des Garantieverschlusses 1 . Bevorzugt ist mindestens eine Sollbruchstelle 29 innerhalb der Höhe mindestens eines Schlitzes 30 , insbesondere in Höhe der Seite 15 des Sicherheitsrings 10 angeordnet (vgl. z.B. Fig. 2 und 9 hinsichtlich der Anordnung der Sollbruchstellen 29 in Höhe der Seite 15 des Sicherheitsrings 10 ). Vorzugsweise ist mindestens ein Abschnitt 12 des Sicherheitsrings 10 je Abschnitt 12 zwischen jeweils zwei Schlitzen 30 als mit der Verschlußkappe 2 fest verbundener Steg herausgebildet (vgl. z.B. Fig. 2 und 9). Das ermöglicht eine genaue Abstimmung der Abmessung des Teilumfangs des jeweiligen Verriegelungsansatzes 17 , da der Durchmesser des Garantieverschlusses 1 vorgegeben ist. Bevorzugt ist mindestens ein Abschnitt 11 des Sicherheitsrings 10 je Abschnitt 11 zwischen jeweils zwei durch jeweils einen in Umfangsrichtung des Garantieverschlusses 1 verlaufenden Schlitz 31 miteinander verbundenen Schlitzen 30 herausgebildet und über mindestens eine Verbindungsstelle 28 mit der Verschlußkappe 2 verbunden (vgl. z.B. Fig. 2). Mindestens ein Schlitz 31 kann mindestens abschnittsweise als Schwächungsnut (zeichnerisch nicht dargestellt) ausgebildet sein. Vorzugsweise wechseln mindestens je ein als Steg ausgebildeter Abschnitt 12 des Sicherheitsrings 10 und mindestens je ein Abschnitt 11 des Sicherheitsrings 10 in der Reihenfolge einander ab, daß an je einen als Steg ausgebildeten Abschnitt 12 je ein Abschnitt 11 anschließt (vgl. z.B. Fig. 2 und 9). Vorzugsweise ist der Teilumfang mindestens eines als Steg ausgebildeten Abschnitts 12 kürzer als der Teilumfang mindestens eines Abschnitts 11 (vgl. z.B. 2 und 9). Bevorzugt weist mindestens ein Schlitz 31 mindestens eine Verbindungsstelle 28 und/oder mindestens ehe Sollbruchstelle 29 auf. Vorzugsweise weist mindestens ein Schlitz 31 eine in Umfangsrichtung des Garantieverschlusses 1 mittig angeordnete Verbindungsstelle 28 auf. Mindestens ein Schlitz 31 kann zwei Verbindungsstellen 28 aufweisen (vgl. z.B. Fig. 2). Mindestens zwei Verbindungsstellen 28 je Schlitz 31 können in Umfangsrichtung des Garantieverschlusses 1 in gleichem Abstand zur Mitte mindestens eines Schlitzes 31 angeordnet sein. Der Abstand zwischen zwei Verbindungsstellen 28 je Schlitz 31 mindestens eines Schlitzes 31 kann gleich dem Abstand zwischen einer Verbindungsstelle 28 und einem Schlitz 30 oder größer oder kleiner als der Abstand zwischen einer Verbindungsstelle 28 und einem Schlitz 30 sein. Mindestens eine Verbindungsstelle 28 kann im Verbindungsbereich jeweils eines Schlitzes 31 und jeweils eines Schlitzes 30 vorgesehen sein. Vorzugsweise ist der Garantieverschluß 1 beidseits einer in der perspektivischen Draufsicht auf die Verriegelungsflanken 21 gesehen durch seine Längsmittelachse L - L und die Mitte in Umfangsrichtung zweier Abschnitte 11 verlaufenden und ihn in zwei gleiche Teile halbierenden Linie A - A symmetrisch ausgebildet. Bevorzugt ist der Innendurchmesser der Innenflächen 19 der Verriegelungsansätze 17 in der Herstellungsstellung geringfügig kleiner als der Außendurchmesser der Mantelaußenfläche 13 des Sicherheitsrings 10 (vgl. z.B. Fig. 5). Mindestens eine Filmscharnierverbindung 27 kann im Längsschnitt gesehen im Bereich des Überganges der Innenfläche 19 mindestens eines Verriegelungssansatzes 17 und der Mantelinnenfläche 14 gebildet werden. Hier besteht diese Möglichkeit beispielsweise i.V.m. jeweils einem im Längsschnitt gesehen in einem Winkel nach außen gerichteten Verriegelungsansatz 17 oder dgl. Mindestens eine Filmscharnierverbindung 27 kann im Längsschnitt gesehen im Bereich des Überganges der Außenfläche 18 mindestens eines Verriegelungsansatzes 17 und der Mantelaußenfläche 13 gebildet werden. Mindestens ein Abstandhalter kann durch den durch den Verlauf der Seite 20 mindestens eines Verriegelungsansatzes 17 in der Herstellungsstellung im Längsschnitt gesehen von unten nach oben von der Innenfläche 19 ausgehend in Richtung auf die Schwenklinie der Filmscharnierverbindung 27 entstehenden Übergangsbereich mit verringerter Wandstärke (verjüngten Übergangsbereich) des Verriegelungsansatzes 17 gebildet werden, wobei bevorzugt die Seite 20 an die Innenseite der Filmscharnierverbindung 27 anschließt. Mindestens eine Aussparung(zeichnerischnicht dargestellt) kann in mindestens einer Filmscharnierverbindung 27 vorgesehen sein. Mindestens eine Filmscharnierverbindung 27 kann innerhalb ihres Teilumfangs mindestens eine Verstärkung (zeichnerisch nicht dargestellt) aufweisen. Mindestens eine Filmscharnierverbindung 27 kann durch mindestens eine durch Wandstärkenverringerung entstehende Rille und/oder dadurch gebildet werden, daß der der jeweiligen Filmscharnierverbindung 27 zugeordnete Verriegelungsansatz 17 gegenüber dem Mantel des Sicherheitsrings 10 mit verringerter Wandstärke ausgebildet ist. Vorzugsweise ist je Abschnitt 11 je ein Verriegelungsansatz 17 vorgesehen (vgl. z.B. Fig. 9). Bevorzugt ist mindestens ein Verriegelungsansatz 17 in der Herstellungsstellung axial nach unten verlängert ausgebildet (vgl. z.B. Fig. 5). Die Wandstärke mindestens eines Verriegelungsansatzes 17 kann gleich der Wandstärke des Mantels des Sicherheitsrings 10 oder größer oder kleiner als die Wandstärke des Mantels des Sicherheitsrings 10 sein. Vorzugsweise ist die Wandstärke des jeweiligen Verriegelungsansatzes 17 kleiner als die Wandstärke des Mantels des Sicherheitsringes 10 , damit der Verriegelungsansatz 17 den Mantel des Sicherheitsringes 10 in der Verriegelungsstellung nicht in seine eigene Wölbungsrichtung zwingen kann. Als "Anschlaglinie" z.B. 38 eines Abstandhalters z.B. 33; 34 wird diejenige Linie bezeichnet, an welcher die Innenfläche 19 eines Verriegelungsansatzes 17 den Abstandhalter z.B. 33; 34 berührt. Wenn in den Ausführungen von der Anschlaglinie z.B. 38 des Abstandhalters z.B. 33; 34 die Rede ist, so kann es sich auch um eine imaginäre Anschlaglinie bei mindestens zwei auf dieser imaginären Anschlaglinie liegenden Punkten, z.B. als axiale Rippen 34 ausgebildeter Abstandhalter handeln, da diese Punkte auf einer imaginären Linie liegen, auch wenn in den Ausführungen zur Vereinfachung im einzelnen nicht weiter darauf eingegangen wird, daß es sich um eine "imaginäre Anschlaglinie" handelt. In der Verriegelungsstellung kann der Innendurchmesser zwischen den Verriegelungsflanken 21 kleiner als der größte Außendurchmesser $-d_1-$ des ringförmigen Vorsprungs, insbesondere Transferrings 42 der Flasche 39 sein. I.d.R. verläuft die Unterseite 43 des Transferrings 42 mit einer leichten Steigung nach oben und der größte Außendurchmesser $-d_1-$ des Transferrings 42 entspricht ungefähr dessen kleinstem Außendurchmesser $-d_2-$ , welcher seinerseits ungefähr dem Außendurchmesser des Außengewindes 40 entspricht (vgl. z.B. Fig. 1). Darüber hinaus eignet sich jeder beliebige anderweitig ausgebildete ringförmige Vorsprung, auch in einzelne Segmente untergliederte ringförmige Vorsprung für den neuerungsgemäßen Garantieverschluß 1 . Mindestens ein Verriegelungsansatz 17 kann sich über den gesamten Teilumfang oder einen Teil des Teilumfangs mindestens eines Abschnitts 11 erstrecken.

Die Verriegelungsflanke 21 mindestens eines Verriegelungsansatzes 17 kann im Längsschnitt gesehen abgerundet und/oder in Richtung zur Innenfläche 19 und/oder Außenfläche 18 zugespitzt sein. Bevorzugt ist mindestens ein Verriegelungsansatz 17 federnd bzw. flexibel ausgebildet. Der Sicherheitsring 10 kann mindestens abschnittsweise starr oder federnd bzw. flexibel, insbesondere mindestens abschnittsweise geringfügig federnd bzw. flexibel ausgebildet sein. Bevorzugt ist mindestens ein Verriegelungsansatz 17 federnder bzw. flexibler ausgebildet als der Sicherheitsring 10 bzw. mindestens ein Abschnitt 11. Vorzugsweise ist zwischen der Innenfläche 19 mindestens eines Verriegelungsansatzes 17 und der Mantelinnenfläche 14 des Sicherheitsrings 10 mindestens ein Abstandhalter z.B. 33; 34 vorgesehen. Mindestens ein Abstandhalter kann als radial nach innen gerichteter Vorsprung, z.B. nockenartiges Teil, Feder, kugelkalottenförmiges Teil, Wulst, Widerhaken, Leiste, Nase, Steg, Nocken usw. ausgebildet sein.

Mindestens ein Abstandhalter kann als Rippe 33; 34 ausgebildet sein. Mindestens ein Abstandhalter z.B. 34 kann axial, d.h. quer zur Umfangsrichtung des Garantieverschlusses 1 verlaufend ausgebildet sein. Es empfiehlt sich, die als Abstandhalter axial ausgebildeten Rippen 34 gleichzeitig als Verbindungsstellen 28 vorzusehen. Mindestens ein Abstandhalter z.B. 33 kann in Umfangsrichtung des Garantieverschlusses 1 verlaufend ausgebildet sein. Mindestens ein Abstandhalter z.B. 33; 34 kann starr oder federnd bzw.flexibel ausgebildet sein. Mindestens ein Abstandhalter z.B. 33; 34 kann über den Teilumfang oder nahezu den Teilumfang mindestens eines Verriegelungsansatzes 17 sich erstreckend ausgebildet sein. Mindestens ein Abstandhalter z.B. 33 ; 34 kann über einen Teil des Teilumfangs mindestens eines Verriegelungsansatzes 17 sich erstreckend ausgebildet sein. Mindestens ein axial, d.h. quer zur Umfangsrichtung des Garantieverschlusses 1 verlaufender Abstandhalter kann als Rippe 34 vorgesehen sein. Vorzugsweise ist die Dicke mindestens eines als Rippe 34 ausgebildeten Abstandhalters so bemessen, daß die Rippe 34 die Mantelinnenfläche 4 der Verschlußkappe 2 nicht nach innen überschreitet. Dadurch wird es ermöglicht, daß die Rippe 34 bei der Entformung des Kunststoffspritzgußteiles nicht abgestreift zu werden braucht. Mangelnde Dicke der Rippe 34 kann dadurch ausgeglichen werden, daß sie sich weiter nach unten reichend erstreckt. Vorzugsweise ist mindestens ein Abstandhalter z.B. 33; 34 bzw. dessen Anschlaglinie z.B. 38 in der Verriegelungsstellung höhenmäßig unterhalb der Verriegelungsflanke 21 mindestens eines Verriegelungsansatzes 17 angeordnet (vgl. z.B. Fig. 3 und 4). Vorzugsweise ist bzw. sind die Dicke mindestens eines Abstandhalters z.B. 33; 34 und/oder die höhenmäßige Anordnung mindestens eines Abstandhalters z.B. 33; 34 bzw. dessen Anschlaglinie z.B. 38 so bemessen, daß der dem Abstandhalter z.B. 33; 34 zugeordnete Verriegelungsansatz 17 in der Verriegelungsstellung des Garantieverschlusses 1 relativ zur Flasche 39 im Längsschnitt gesehen einen Winkel -α- von insbesondere 20° bis 30° des Verriegelungsansatzes 17 zur Längsmittelachse L - L des Garantieverschlusses 1 einnimmt (vgl. z.B. Fig. 4). Wird der Winkel -α- zu spitz, so besteht die Gefahr, daß beim Aufschrauben (Lösen) des Garantieverschlusses 1 relativ von der Flasche 39 der jeweilige Verriegelungsansatz 17 an dem Transferring 42 vorbeigleitet, ohne unter dessen Unterseite 43 gezogen zu werden. Mindestens ein Abstandhalter kann durch den durch den Verlauf der Seite 15 des Sicherheitsrings 10 mindestens im Bereich mindestens eines Verriegelungsansatzes 17 im Längsschnitt gesehen von oben nach unten von der Mantelinnenfläche 14 ausgehend in Richtung auf die Schwenklinie der Filmscharnierverbindung 27 entstehenden Übergangsbereich mit verringerter Wandstärke (verjüngten Übergangsbereich) des Sicherheitsrings 10 gebildet werden, wobei bevorzugt die Seite 15 an die Innenseite der Filmscharnierverbindung 27 anschließt.

Die Höhe in der Herstellungsstellung mindestens eines Verriegelungsansatzes 17 kann gleich der Höhe des Sicherheitsrings 10 oder größer oder kleiner als die Höhe des Sicherheitsrings 10 sein. Bei größerer Höhe des jeweiligen Verriegelungsansatzes 17 als der Sicherheitsring 10 ist die Möglichkeit gegeben, daß der Verschlußkappenmantel durch Anschlag der Innenfläche 19 des Verriegelungsansatzes 17 an die Mantelinnenfläche 4 der Verschlußkappe 2 gleichzeitig als Abstandhalter wirkt (zeichnerisch nicht dargestellt). Vorzugsweise verläuft die Seite 20 mindestens eines Verriegelungsansatzes 17 mit in der Herstellungsstellung im Längsschnitt gesehen von unten nach oben von der Außenfläche 18 ausgehend in Richtung auf die Schwenklinie der Filmscharnierverbindung 27 sich verringernder Wandstärke des Verriegelungsansatzes 17 , wobei bevorzugt die Seite 20 an die Außenseite der Filmscharnierverbindung 27 anschließt.

Mindestens ein Abstandhalter des Mantels des Sicherheitsrings 10 und mindestens ein Abstandhalter mindestens eines Verriegelungsansatzes 17 können einen Anschlag bilden.Die Höhe eines Verriegelungsansatzes 17 kann zwischen insbesondere 4 mm und 8 mm betragen. Der Teilumfang eines Abschnitts 11 kann zwischen insbesondere 20 mm und 25 mm betragen. Der Teilumfang eines Verriegelungsansatzes 17 kann zwischen insbesondere 20 mm und 25 mm betragen. Es kann eine beliebige Anzahl Abschnitte 11 , insbesondere 2 oder 3 oder 4 Abschnitte 11 vorgesehen sein. Es kann eine beliebige Anzahl als Stege ausgebildeter Abschnitte 12 , insbesondere 2 oder 3 oder 4 als Stege ausgebildete Abschnitte 12

7

vorgesehen sein. Es kann eine beliebige Anzahl Verriegelungsansätze 17 , insbesondere 2 oder 3 oder 4 Verriegelungsansätze 17 vorgesehen sein. Die Verbindung zwischen Verschlußkappe 2 und Sicherheitsring 10 kann durch einen Materialfilm und/oder Verbindungsstellen 28 und/oder Sollbruchstellen 29 bewirkt werden. Es würde den Rahmen der Ausführungen sprengen, alle Möglichkeiten der Ausformung aufzuführen, deshalb erfolgt an dieser Stelle der Hinweis, daß alle denkbaren Möglichkeiten der Ausbildung im Rahmen der Erfindung vorgesehen sind, auch wenn in den Ausführungen aus dem vorstehend genannten Grund im einzelnen nicht weiter darauf eingegangen wird. Eine Verstärkung kann in an sich bekannter Weise durch einen stärker ausgebildeten Materialfilm, stärker ausgebildete Sollbruchstellen 29 und/oder durch deren kürzere Abstände zueinander bewirkt werden, usw. Die Verstärkung kann sich über eine beliebige Länge erstrecken. Mindestens eine Verstärkung kann in mindestens eine von zwei möglichen Richtungen in Umfangsrichtung neben mindestens einem Schlitz 30 angeordnet sein. Mindestens zwei Verriegelungsansätze 17 können an mindestens je einer ihrer beiden aneinander grenzenden Randseiten 22 untereinander verbunden sein und dadurch je einen Verriegelungsansatz 17 herausbilden. Dadurch besteht die Möglichkeit, daß ein derartiger aus mindestens zwei untereinander verbundenen Verriegelungsansätzen 17 bestehender Verriegelungsansatz 17 gebildet wird, welcher sich über einen Teilumfang des Sicherheitsrings 10 erstreckt. Der Einfachheit halber wird auch hier von einem Verriegelungsansatz 17 gesprochen. Das bezieht sich in diesem Zusammenhang ebenfalls auf "mindestens ein", "der jeweilige" usw. Es erfolgt allerdings der Hinweis an dieser Stelle, daß, wenn von einem Verriegelungsansatz 17 die Rede ist, es sich gleichermaßen auch um einen aus mindestens zwei untereinander verbundenen Verriegelungsansätzen 17 bestehenden Verriegelungsansatz 17 handeln kann, sofern dies durch den Zusammenhang nicht ausgeschlossen ist, auch wenn aus dem vorstehend genannten Grund in den Ausführungen im einzelnen nicht weiter darauf eingegangen wird. Mindestens zwei Verriegelungsansätze 17 können an ihren Randseiten 22 untereinander verbunden sein und dadurch einen, einen in sich geschlossenen Ring bildenden Verriegelungsansatz 17 bilden. Dadurch besteht die Möglichkeit, daß ein derartiger aus mindestens zwei untereinander verbundenen Verriegelungsansätzen 17 bestehender in sich geschlossener Ring gebildet wird, welcher sich über den gesamten Umfang des Sicherheitsrings 10 erstreckt. Der Einfachheit halber wird auch hier von einem Verriegelungsansatz 17 gesprochen und imaginär dessen Umfang als Teilumfang angenommen. Das bezieht sich in diesem Zusammenhang ebenfalls auf "mindestens ein", "der jeweilige" usw. Es erfolgt allerdings der Hinweis an dieser Stelle, daß, wenn von einem Verriegelungsansatz 17 die Rede ist, es sich gleichermaßen auch um einen aus mindestens zwei untereinander verbundenen und einen in sich geschlossenen Ring bildenden Verriegelungsansätzen 17 bestehenden Verriegelungsansatz 17 handeln kann, sofern dies durch den Zusammenhang nicht ausgeschlossen ist, auch wenn aus dem vorstehend genannten Grund im einzelnen nicht weiter darauf eingegangen wird. Wenn in den Ausführungen von "in der Draufsicht auf die Verriegelungsflanken 21 gesehen" die Rede ist, so bedeutet eine derartige Stellung des Garantieverschlusses 1 zugleich auch dessen Herstellungsstellung. Wenn lediglich von "in der Herstellungsstellung" gesprochen wird, so handelt es sich dabeinicht um eine "Draufsicht auf die Verriegelungsflanken" 21 , da eine Draufsicht auf die Verriegelungsflanken 21 durch den oder einen zumindest gleichbedeutenden Zusatz wie "in der Draufsicht auf die Verriegelungsflanken 21 der Verriegelungsansätze 17 gesehen" gekennzeichnet ist. Mindestens ein Abstandhalter z.B. 33; 34 kann in Umfangsrichtung im Bereich oder im unmittelbaren Bereich mindestens einer Randseite 22 mindestens eines Verriegelungsansatzes 17 oder in Umfangsrichtung mittig mindestens eines Verriegelungsansatzes 17 angeordnet sein. Mit vorangestelltem "z.B." werden die Abstandhalter z.B. 33; 34 und Anschlaglinien z.B. 38 bezeichnet, da beispielsweise mindestens ein Abstandhalter auch durch die durch den Verlauf der Seite 15 des Sicherheitsrings 10 im Bereich mindestens eines Verriegelungsansatzes 17 im Längsschnitt gesehen von oben nach unten von der Mantelinnenfläche 14 ausgehend in Richtung auf die Schwenklinie der Filmscharnierverbindung 27 entstehende Wandstärkenverringerung des Sicherheitsrings 10 gebildet werden kann, usw. Es erfolgt deshalb an dieser Stelle der Hinweis, daß die anderweitigen aufgezeigten Ausführungsmöglichkeiten in die Bezeichnung "Abstandhalter" eingeschlossen sind, sofern dies durch den Zusammenhang nicht ausgeschlossen ist, auch wenn zur Vereinfachung in den Ausführungen im einzelnen nicht weiter darauf eingegangen wird. Mindestens ein Abstandhalter z.B. 33; 34 kann mindestens abschnittsweise als Verlängerung nach oben der im Längsschnitt gesehen mindestens im Bereich mindestens eines Verriegelungsansatzes 17 von oben nach unten von der Mantelinnenfläche 14 ausgehend in Richtung auf die Schwenklinie der Filmscharnierverbindung 27 verlaufenden und die Wandstärkenverringerung des Sicherheitsrings 10 bildenden Seite 15 des Sicherheitsrings 10 ausgebildet sein (zeichnerisch nicht dargestellt). Die mindestens im Bereich mindestens eines Verriegelungsansatzes 17 im Längsschnitt gesehen von oben nach unten von der Mantelinnenfläche 14 ausgehend in Richtung auf die Schwenklinie der Filmscharnierverbindung 27 verlaufende und die Wandstärkenverringerung des Sicherheitsrings 10 bildende Seite 15 des Sicherheitsrings 10 kann in einem Winkel von insbesondere 12° bis 25° zur Mantelaußenfläche 13 des Sicherheitsrings 10 verlaufen. Die in der Herstellungsstellung im Längsschnitt gesehen von unten nach oben von der Innenfläche 19 ausgehend in Richtung auf die Schwenklinie der Filmscharnierverbindung 27 verlaufende und die Wandstärkenverringerung des jeweiligen Verriegelungsansatzes 17 bildende Seite 20 des Verriegelungsansatzes 17 kann in einem Winkel von insbesondere 12° bis 25° zur Außenfläche 18 des Verriegelungsansatzes 17 verlaufen.

Mindestens ein Abstandhalter z.B. 33; 34 kann auf der Innenfläche 19 mindestens eines Verriegelungsansatzes 17 innerhalb dessen Höhe vorgesehen sein. Die Höhe der Anordnung des jeweiligen Abstandhalters z.B. 33; 34 spielt für die Flexibilität bzw. Federung des jeweiligen Verriegelungsansatzes 17 eine große Rolle, d.h. je tiefer der jeweilige Abstandhalter z.B. 33; 34 angeordnet ist, desto flexibler bzw. federnder ist der jeweilige Verriegelungsansatz 17 in seinem Bereich oberhalb des entsprechenden Abstandhalters z.B. 33; 34 .Bevorzugt verläuft die konkave Wölbung der Verriegelungsflanke 21 mindestens eines Verriegelungsansatzes 17 als Kreisabschnitt. Der Radius hängt ab vom Teilumfang des jeweiligen Verriegelungsansatzes 17 und dem Winkel -$\alpha$-, d.h. je größer der Teilumfang wird und je kleiner der Winkel -$\alpha$- wird, desto kleiner wird auch der Radius. Der Radius der konkaven als Kreisabschnitt verlaufenden Wölbung der Verriegelungsflanke 21 mindestens eines Verriegelungsansatzes 17 kann insbesondere zwischen 60 mm und 180 mm betragen. Wenn vom Betätigungsteil und dem Stempel 48 die Rede ist, so wird in bezug auf den Stempel 48 von "insbesondere dem Stempel" 48 gesprochen, weil der Stempel 48 eine bevorzugte Ausführungsform des Betätigungsteils darstellt. Der Sicherheitsring 10 kann mindestens zwei Abschnitte 11 aufweisen. Eine größere Höhe des Sicherheitsrings 10 als die Höhe der Verriegelungsansätze 17 bewirkt, daß nach dem Aufreißen der Abschnitte 11 des Sicherheitsrings 10 diese weniger weit vom Hals 41 der Flasche 39 nach außen abstehen. Bevorzugt ist der Innendurchmesser der Mantelinnenfläche 14 des Sicherheitsrings 10 gleich oder ungefähr gleich dem Innendurchmesser der Mantelinnenfläche 4 der Verschlußkappe 2 . Vorzugsweise ist mindestens ein Abschnitt 11 an mindestens einem äußeren Ende insbesondere über seine gesamte Höhe von seiner Außenfläche 13 ausgehend in Richtung zum jeweiligen Schlitz 30 querschnittmäßig abgerundet oder abgeschrägt. Das kann je nach Ausführungsform des Garantieverschlusses 1 sinnvoll sein, um an den äußeren Enden der aufgerissenen Abschnitte 11 scharfe Ecken und Kanten zu vermeiden. Die Wandstärke und die Form der Verriegelungsansätze 17 erfordern eine Abstimmung auf die Wandstärke und die Form des Sicherheitsrings 10 bzw. des jeweiligen Abschnitts 11 des Sicherheitsrings 10 . Nach Abriß des jeweiligen Abschnitts 11 hat der jeweilige Verriegelungsansatz 17 das Bestreben, sich in seine Ursprungsform zurückzubiegen und den jeweiligen Abschnitt 11 entgegengesetzt seiner Wölbungsrichtung aufzuweiten. Dabei spielt eine gewisse Wandstärke der Abschnitte 11 und Abstimmung der Teile aufeinander eine Rolle. Andererseits handelt es sich hierbei um einen durchaus wünschenswerten Effekt, denn durch ihn kann erreicht werden, daß der jeweilige Abschnitt 11 , da er nach dem Aufriß unter Federwirkung steht und je nach Abstimmung der Teile aufeinander leicht vom Flaschenhals absteht, wieder an den Flaschenhals angedrückt und damit in die Ursprungslage (die Lage, die er vor dem Abriß eingenommen hat) gebracht werden kann. Das spielt eine große Rolle, da der Konsument so auf den ersten Blick einwandfrei erkennen kann, daß es sich um eine zuvor noch nicht geöffnete Flasche mit dem Originalinhalt handelt. Der Innendurchmesser der Innenflächen 19 der Verriegelungsansätze 17 kann in der Herstellungsstellung gleich oder ungefähr gleich dem oder größer oder kleiner als der Innendurchmesser der Mantelinnenfläche 14 des Sicherheitsrings 10 sein. Der Innendurchmesser der Innenflächen 19 der Verriegelungsansätze 17 kann in der Herstellungsstellung gleich oder ungefähr gleich dem oder größer oder kleiner als der Außendurchmesser der Mantelaußenfläche 13 des Sicherheitsrings 10 sein. Der Außendurchmesser der Außenflächen 18 der Verriegelungsansätze 17 kann in der Herstellungsstellung gleich oder ungefähr gleich dem oder größer oder kleiner als der Außendurchmesser der Mantelaußenfläche 13 des Sicherheitsrings 10 sein.

Mindestens eine Filmscharnierverbindung 27 kann durch einen Versatz im Längsschnitt gesehen mindestens eines Verriegelungsansatzes 17 gegenüber dem Mantel des Sicherheitsrings 10 gebildet werden. Vorzugsweise wird mindestens eine Filmscharnierverbindung 27 im Längsschnitt gesehen im Bereich des Überganges der Innenfläche 19 mindestens eines Verriegelungsansatzes 17 und der Mantelaußenfläche 13 des Sicherheitsrings 10 gebildet. Mindestens eine Filmscharnierverbindung 27 kann im Längsschnitt gesehen einen Teil des im Längsschnitt gesehen zwischen der Innenfläche 19 mindestens eines Verriegelungsansatzes 17 und der Mantelaußenfläche 13 des Sicherheitsrings 10 und/oder zwischen der Außenfläche 18 mindestens eines Verriegelungsansatzes 17 und der Mantelinnenfläche 14 des Sicherheitsrings 10 gebildeten Abstands umfassen. Mindestens ein Verriegelungsansatz 17 kann mit seiner Seite 20 über mindestens eine sich über einen Teil ihres Teilumfangs oder insbesondere ihren gesamten Teilumfang erstreckende Filmscharnierverbindung 27 an die Seite 15 des Sicherheitsrings 10 angeschlossen sein. Mindestens ein Verriegelungsansatz 17 kann in der Herstellungsstellung im Längsschnitt gesehen in bezug auf die Längsmittelachse L - L des Garantieverschlusses 1 von der Filmscharnierverbindung 27 ausgehend in einem Winkel von insbesondere 5° bis 25° nach außen abgespreizt sein. Bei einem derartigen nach außen abgespreizten Verriegelungsansatz 17 wird dessen Filmscharnierverbindung 27 bevorzugt im Bereich zwischen dessen Innenfläche 19 und der Mantelinnenfläche 14 des Sicherheitsrings 10 gebildet, wie in z.B. Fig. 7 und 8 zeichnerisch dargestellt. Vorzugsweise überschreitet mindestens eine in der Herstellungsstellung im Längsschnitt gesehen von unten nach oben von der Innenfläche 19 ausgehend in Richtung auf die Schwenklinie der Filmscharnierverbindung 27 verlaufende und die Wandstärkenverringerung des jeweiligen Verriegelungsansatzes 17 bildende Seite 20 eine als imaginäre Verlängerung nach unten der Mantelinnenfläche 14 des Sicherheitsrings 10 angenommene Linie F - F nicht nach innen bzw. verläuft insbesondere entsprechend dieser Linie. Mindestens ein Abstandhalter z.B. 33; 34 kann in der Herstellungsstellung von insbesondere dem oberen Ende mindestens eines Verriegelungsansatzes 17 ausgehend mindestens abschnittsweise nach unten sich erstreckend ausgebildet sein. Diese Ausführungsmöglichkeit wird insbesondere i.V.m. den Ausführungsformen als sinnvoll angesehen, bei denen die Verriegelungsansätze 17 in der Herstellungsstellung im Längsschnitt gesehen nach außen abgespreizt verlaufen, wobei hier sinnvollerweise als Rippen 34 ausgebildete Abstandhalter auf der Innenfläche 19 des jeweiligen Verriegelungsansatzes 17 vorgesehen sind. Bevorzugt verläuft mindestens eine als Abstandhalter ausgebildete Rippe 34 in der Herstellungsstellung im Längsschnitt gesehen dergestalt, daß sie eine als imaginäre Verlängerung nach unten der Mantelinnenfläche 14 des Sicherheitsrings 10 angenommene Linie F - F nicht nach innen überschreitet bzw. insbesondere entsprechend dieser Linie verläuft. Mindestens eine als Abstandhalter ausgebildete Rippe 34 kann in der Herstellungsstellung im Längsschnitt gesehen von oben nach unten sich verbreiternd verlaufen. Eine derartige Ausführungsmöglichkeit ist in z.B. Fig. 8 zeichnerisch dargestellt und der z.B. Fig. 7 ähnlich. Mindestens ein Abstandhalter z.B. 33; 34 kann mindestens abschnittsweise als Verlängerung nach unten der in der Herstellungsstellung im Längsschnitt gesehen von unten nach oben von der Innenfläche 19 ausgehend in Richtung auf die Schwenklinie der Filmscharnierverbindung 27 verlaufenden und die Wandstärkenverringerung des jeweiligen Verriegelungsansatzes 17 bildenden Seite 20 des Verriegelungsansatzes 17 ausgebildet sein.

Mindestens ein Abstandhalter z.B. 33; 34 kann auf der Mantelinnenfläche 14 des Sicherheitsrings 10 bzw. auf der Mantelinnenfläche 14 mindestens eines Abschnitts 11 des Sicherheitsrings 10 innerhalb dessen Höhe vorgesehen sein. Die Abstände mindestens eines Verriegelungsansatzes 17 zwischen seinen Randseiten 22 und den diesen zugeordneten Schlitzen 30 können einander ungleich oder insbesondere gleich sein. Zwischen mindestens einer Randseite 22 mindestens eines Verriegelungsansatzes 17 und mindestens einem Schlitz 30 kann ein Abstand oder kein Abstand vorgesehen sein. Mindestens ein Verriegelungsansatz 17 kann sich umfangsmäßig mindestens abschnittsweise zwischen mindestens einer Verbindungsstelle 28 und mindestens einem Schlitz 30 erstrecken. Diese Ausführungsmöglichkeit ist bevorzugt dann vorgesehen, wenn der jeweilige Abschnitt 11 des Sicherheitsrings 10 an nur einem äußeren Ende eine Verbindungsstelle 28 aufweist und an dem entgegengesetzten äußeren Ende von einem anderen Abschnitt 11 des Sicherheitsrings 10 abgerissen wird, wobei bevorzugt der dem jeweiligen Abschnitt 11 zugeordnete Verriegelungsansatz 17 einen der Breite oder ungefähr der Breite der Verbindungsstelle 28 und in deren Bereich verlaufenden Abstand zum jeweiligen Schlitz 30 aufweist. Mindestens eine Randseite bzw. die Randseite 22 mindestens eines Verriegelungsansatzes 17 kann bzw. können in der Herstellungsstellung von insbesondere der jeweiligen Filmscharnierverbindung 27 ausgehend mindestens abschnittsweise über insbesondere ihre gesamte Höhe schräg von oben nach unten verlaufend vorgesehen sein (vgl. z.B. Fig. 5). Vorzugsweise verläuft mindestens eine Randseite 22 mindestens eines Verriegelungsansatzes 17 in der Herstellungsstellung gerade. Mindestens ein Verriegelungsansatz 17 kann in der Herstellungsstellung im Längsschnitt gesehen mindestens abschnittsweise von insbesondere seinem unteren Ende ausgehend von unten nach oben sich verbreiternd oder insbesondere sich verjüngend ausgebildet sein. Mindestens ein Schlitz 30 kann höhenmäßig mindestens abschnittsweise als Schwächungsnut ausgebildet sein. Mindestens eine derartige Schwächungsnut kann höhenmäßig mindestens abschnittsweise in die Mantelaußenfläche 13 und/oder die Mantelinnenfläche 14 des Sicherheitsrings 10 eingelassen sein. Mindestens eine Verbindungsstelle 28 kann innerhalb der Höhe mindestens eines Schlitzes 30 an insbesondere dessen oberem Ende angeordnet sein. Dadurch kann erreicht werden, daß die Abschnitte 11 des Sicherheitsrings 10 sich kontrolliert weit vom Hals 41 der Flasche 39 nach außen abspreizen, ohne insgesamt aufzureißen. Diese Ausführungsmöglichkeit läßt sich gezielt mit der Ausführungsform des Garantieverschlusses 1 vereinbaren, bei welcher mindestens eine Verbindungsstelle 28 insbesondere in Umfangsrichtung mittig mindestens eines Verriegelungsansatzes 17 vorgesehen ist. Als "Verbindungsstelle" 28 wird ein Materialfilm bezeichnet, welcher so stark ausgebildet ist, daß er bei der aufwärts gerichteten Hubbewegung des Garantieverschlusses 1 nicht reißt.

Als "Sollbruchstelle" 29 wird ein Materialfilm bezeichnet, welcher so schwach ausgebildet ist, daß er bei der aufwärts gerichteten Hubbewegung des Garantieverschlusses 1 reißt. Mindestens eine Verbindungsstelle 28 kann innerhalb mindestens eines Schlitzes 31 insbesondere in Umfangsrichtung unmittelbar neben mindestens einem Schlitz 30 an mindestens einer dessen Seiten angeordnet sein. Die Anordnung mindestens einer Verbindungsstelle 28 innerhalb mindestens eines Schlitzes 31 in Umfangsrichtung unmittelbar neben einem Schlitz 30 an einer dessen Seiten bedingt, daß der jeweilige Abschnitt 11 des Sicherheitsrings 10 an der Seite, an der er keine Verbindungsstelle 28 aufweist, von einem anderen Abschnitt 11 des Sicherheitsrings 10 abgerissen werden kann. In der Verriegelungsstellung kann der Innendurchmesser zwischen den Verriegelungsflanken 21 kleiner als der kleinste Außendurchmesser -$d_2$- des ringförmigen Vorsprungs, insbesondere Transferrings 42 der Flasche 39 sein. Die Verriegelungsflanke 21 mindestens eines Verriegelungsansatzes 17 kann in der Herstellungsstellung im Längsschnitt gesehen an mindestens einem äußeren Ende und/oder in Umfangsrichtung mittig im Längsschnitt gesehen von oben nach unten von der Innenfläche 19 ausgehend in Richtung zur Außenfläche 18 zugespitzt und im übrigen Bereich im Längsschnitt gesehen von oben nach unten von der Außenfläche 18 ausgehend in Richtung zur Innenfläche 19 zugespitzt oder abgerundet sein, wobei die unterschiedlichen Bereiche insbesondere übergangslos ineinander übergehen. Nach dieser Ausführungsmöglichkeit verläuft die Verriegelungsflanke 21 in den entsprechenden Bereichen dergestalt, daß sie bei entsprechender Winkelstellung -$\alpha$- des jeweiligen Verriegelungsansatzes 17 nach erfolgtem Aufriß an der Unterseite 43 des Transferrings 42 vorbeigleitet und dieser Verriegelungsansatz 17 bei fortgesetzter aufwärts gerichteter Hubbewegung des Garantieverschlusses 1 nicht weiter aufgeklappt wird. Dabei eignet sich eine in Umfangsrichtung mittige Anordnung eines in der Herstellungsstellung im Längsschnitt gesehen von oben nach unten von der Innenfläche 19 ausgehend in Richtung zur Außenfläche 18 dieses Verriegelungsansatzes 17 zugespitzten Bereiches der Verriegelungsflanke 21 für die Ausführungsformen des Garantieverschlusses 1 , bei welchen je Abschnitt 11 des Sicherheitsrings 10 mindestens eine mindestens in etwa mittige Verbindungsstelle 28 vorgesehen ist und die Anordnung eines in der Herstellungsstellung im Längsschnitt gesehen von oben nach unten von der Innenfläche 19 ausgehend in Richtung zur Außenfläche 18 dieses Verriegelungsansatzes 17 zugespitzten Bereiches der Verriegelungsflanke 21 an einem äußeren Ende dieses Verriegelungsansatzes 17 für die Ausführungsformen des Garantieverschlusses 1 , bei welchen je Abschnitt 11 nur an einem äußeren Ende eine Verbindungsstelle 28 vorgesehen ist, und zwar im Bereich des äußeren Endes dieses Abschnitts 11 des Sicherheitsrings 10 . Der dem jeweiligen Abschnitt 11 an dem äußeren Ende, an dem die Verbindungsstelle 28 oder ein als Steg ausgebildeter Abschnitt 12 des Sicherheitsrings 10 sich befindet, zugeordnete Schlitz 30 kann an seinem unteren Ende eine Verbindungsstelle 28 aufweisen und eine weitere Verbindungsstelle 28 kann in Umfangsrichtung innerhalb des Schlitzes 31 , insbesondere in Umfangsrichtung zwischen dessen Mitte und der zuvor beschriebenen Verbindungsstelle 28 oder dem als Steg ausgebildeten Abschnitt 12 des Sicherheitsrings 10 angeordnet sein und der an dem entgegengesetzten äußeren Ende des Abschnitts 11 des Sicherheitsrings 10 sich befindende Schlitz 30 ist zum Abriß bestimmt. Diese Ausführungsmöglichkeit läßt sich auch mit den zuvor beschriebenen Ausführungsformen kombinieren und auf diese Weise erreichen, daß der jeweils abgerissene Abschnitt 11 des Sicherheitsrings 10 zwischen diesen beiden Verbindungsstellen 28 nach erfolgtem Abriß bei der fortgesetzten aufwärts gerichteten Hubbewegung des Garantieverschlusses 1 nach innen gedrückt wird und dessen übriger Bereich nach außen vom Hals 41 der Flasche 39 sich abspreizt und nach Abnahme des Garantieverschlusses 1 von der Flasche 39 in die Ursprungslage zurückkehrt. Die Verriegelungsflanke 21 mindestens eines Verriegelungsansatzes 17 kann in der Herstellungsstellung über einen Teil ihres Teilumfangs oder insbesondere den gesamten Teilumfang von unten nach oben eingebuchtet bzw. konkav eingewölbt sein. Die Verriegelungsflanke 21 mindestens eines Verriegelungsansatzes 17 kann in der Herstellungsstellung über einen Teil ihres Teilumfangs, insbesondere in Umfangsrichtung mittig von unten nach oben eingebuchtet bzw. konkav eingewölbt sein, insbesondere zusätzlich zur über den gesamten Teilumfang dieser Verriegelungsflanke 21 sich von unten nach oben erstreckenden Einbuchtung bzw. konkaven Einwölbung und insbesondere bei einer bestimmten abgespreizten Winkelstellung -$\alpha$- im gleichen Radius wie der Transferring 42 der Flasche 39 verlaufen. Eine derartige über einen Teilumfang sich erstreckende Einbuchtung bzw. konkave Einwölbung der Verriegelungsflanke 21 des jeweiligen Verriegelungsansatzes 17 von unten nach oben bewirkt, daß bei einer bestimmten abgespreizten Winkelstellung -$\alpha$-dieser Verriegelungsansatz nach erfolgtem Aufriß an der Unterseite 43 des Transferrings 42 vorbeigleitet und dieser Verriegelungsansatz 17 bei fortgesetzter aufwärts gerichteter Hubbewegung des Garantieverschlusses 1 nicht weiter aufgeklappt wird. Die Verriegelungsflanke 21 mindestens eines Verriegelungsansatzes 17 kann in der Herstellungsstellung von unten nach oben über insbesondere ihren gesamten Teilumfang in einem derartigen Radius kreisabschnittsförmig konkav eingewölbt sein, daß in der Verriegelungsstellung dieser Radius gleich dem Radius der Unterseite 43 des Transferrings 42 bzw. des Übergangsbereiches zwischen der Unterseite 43 des Transferrings 42 und dem Hals 41 der Flasche 39 ist. Eine über insbesondere den gesamten Teilumfang sich erstreckende derartige konkav kreisabschnittsförmige Wölbung wird als besonders vorteilhaft in bezug auf die Ausführungsformen des Garantieverschlusses 1 angesehen, bei denen der jeweilige Abschnitt 11 des Sicherheitsrings 10 mindestens eine mindestens in etwa mittig in Umfangsrichtung des jeweiligen Schlitzes 31 angeordnete Verbindungsstelle 28 aufweist, da hier beim Abspreizen nach außen vom Hals 41 der Flasche 39 die äußeren Enden des jeweiligen Verriegelungsansatzes 17 nicht stören. Die Einbuchtung bzw. Einwölbung in der Herstellungsstellung von unten nach oben der Verriegelungsflanke 21 mindestens eines Verriegelungsansatzes 17 kann mindestens abschnittsweise in einer beliebigen geometrischen Form, z.B. ellipsen- oder parabel- oder sinus- oder hyperbel- oder kreisabschnittsförmig oder ovalabschnittsförmig usw. verlaufen. Die Seite 15 des Sicherheitsrings 10 kann im Längsschnitt gesehen mindestens abschnittsweise gerade oder konkav oder konvex gewölbt verlaufen. Die Seite 15 des Sicherheitsrings 10 kann im Längsschnitt gesehen mindestens abschnittsweise in einer beliebigen geometrischen Form, z.B. ellipsen- oder parabel- oder sinus- oder hyperbel- oder kreisabschnittsförmig oder ovalabschnittsförmig usw. verlaufen. Es würde den Rahmen der Ausführungen sprengen, auf jede denkbare geometrische Form einzugehen, deshalb erfolgt an dieser Stelle der Hinweis, daß alle denkbaren geometrischen Formen im Rahmen der Erfindung vorgesehen sind, sofern dies durch den Zusammenhang nicht ausgeschlossen ist, auch wenn aus dem zuvor genannen Grund in den Ausführungen im einzelnen nicht weiter darauf eingegangen wird. Mindestens zwei untereinander unterschiedliche Abschnitte der Seite 15 des Sicherheitsrings 10 können im Längsschnitt gesehen insbesondere übergangslos ineinander übergehen. Vorzugsweise verläuft die Seite 15 des Sicherheitsrings 10 im Längsschnitt gesehen gerade. Falls die Seite 15 des Sicherheitsrings 10 im Längsschnitt gesehen nicht gerade verläuft, so werden zur Bestimmung des Winkels in bezug auf die Mantelaussenfläche 13 des Sicherheitsrings 10 die Übergangsbereiche zwischen der Filmscharnierverbindung 27 und der Mantelinnenfläche 14 des Sicherheitsrings 10 als imaginäre Punkte angenommen, durch welche eine gerade Linie zur Bestimmung des Winkels verläuft. Wenn in den Ausführungen von der "Anschlaglinie" z.B. 38 die Rede ist, so kann es sich je nach Ausführungsform des Garantieverschlusses 1 auch um eine "Anschlagfläche" handeln, beispielsweise in bezug auf die als Anschlagflächen ausgebildete Seite 15 des Sicherheitsrings 10 , Seite 20 mindestens eines Verriegelungsansatzes 17 usw.

Es erfolgt deshalb an dieser Stelle der Hinweis, daß es sich, wenn von einer Anschlaglinie z.B. 38 die Rede ist, je nach Ausführungsform des Garantieverschlusses 1 auch um eine "Anschlagfläche" handeln kann, sofern dies durch den Zusammenhang nicht ausgeschlossen ist, auch wenn der Einfachheit halber in den Ausführungen im einzelnen nicht weiter darauf eingegangen wird. Bei der als Abstandhalter ausgebildeten Seite 15 des Sicherheitsrings 10 sind bevorzugt weitere Abstandhalter z.B. 33; 34 nicht vorgesehen, damit der jeweilige Verriegelungsansatz 17 in der Verriegelungsstellung in seinem oberen Bereich eine ausreichende Federung bzw. Flexibilität besitzt. Das gilt entsprechend auch für die als Abstandhalter ausgebildete Seite 20 mindestens eines Verriegelungsansatzes 17 . Die zeichnerische Darstellung von Abstandhaltern z.B. 33; 34 in den Fig. 3 bis 9 und 10 geschieht im wesentlichen zur Einsparung von Zeichnungen, da auf diese Weise gleichzeitig verschiedene Ausführungsformen von Abstandhaltern in diesen Zeichnungen untergebracht sind. Die Seite 20 mindestens eines Verriegelungsansatzes 17 kann in der Herstellungsstellung im Längsschnitt gesehen mindestens abschnittsweise gerade oder konkav oder konvex gewölbt verlaufen. Die Seite 20 mindestens eines Verriegelungsansatzes 17 kann in der Herstellungsstellung im Längsschnitt gesehen mindestens abschnittsweise in einer beliebigen geometrischen Form, z.B. ellipsen- oder parabel- oder sinus- oder hyperbel- oder kreisabschnittsförmig oder ovalabschnittsförmig usw. verlaufen. Es würde den Rahmen der Ausführungen sprengen, auf jede denkbare geometrische Form einzugehen, deshalb erfolgt an dieser Stelle der Hinweis, daß alle denkbaren geometrischen Formen im Rahmen der Erfindung vorgesehen sind, sofern dies durch den Zusammenhang nicht ausgeschlossen ist, auch wenn aus dem zuvor genannten Grund in den Ausführungen im einzelnen nicht weiter darauf eingegangen wird. Mindestens zwei untereinander unterschiedliche Abschnitte der Seite 20 mindestens eines Verriegelungsansatzes 17 können in der Herstellungsstellung im Längsschnitt gesehen insbesondere übergangslos ineinander übergehen. Vorzugsweise verläuft die Seite 20 mindestens eines Verriegelungsansatzes 17 in der Herstellungsstellung im Längsschnitt gesehen gerade.

Bevorzugt verläuft die Mantelaußenfläche 13 des Sicherheitsrings 10 höhenmäßig mindestens in ihrem oberen Bereich im Längsschnitt gesehen abgeschrägt von oben nach unten und innen nach außen (vgl. z.B. Fig. 6 bis 8). Bei der Ausführungsform des Garantieverschlusses 1 nach z.B. Fig. 6 hat die in der Herstellungsstellung im Längsschnitt gesehen in Richtung auf die Schwenklinie der Filmscharnierverbindung 27 verlaufende Abschrägung von unten nach oben der Seite 20 mindestens eines Verriegelungsansatzes 17 zusätzlich aber auch noch die Bedeutung, daß sich die Verriegelungsansätze 17 hinsichtlich des Abstreifvorganges des Kunststoffspritzgußteiles entformen lassen. Bei der Ausführungsform nach z.B. Fig. 6 sind sowohl der Sicherheitsring 10 als auch die Verriegelungsansätze 17 in den Abstreifring und die Verschlußkappe 2 in die Hohlform des Kunststoffspritzgußwerkzeugs integriert. Nachdem die Hohlform weggefahren wurde und Auswerfer und Abstreifring die Verschlußkappe 2 vom Kern entformt haben, werden durch den Auswerfer in einem zweiten Schub der Sicherheitsring 10 und die Verriegelungsansätze 17 aus dem

12

Abstreifring gezogen. Dabei spielt eine entsprechende Abschrägung in der Herstellungsstellung im Längsschnitt gesehen der Seite 20 des jeweiligen Verriegelungsansatzes 17 , sowie natürlich auch eine entsprechende Abschrägung im Längsschnitt gesehen des höhenmäßig mindestens oberen Bereiches der Mantelaußenfläche 13 des Sicherheitsrings 10 eine große Rolle, damit sich der Sicherheitsring 10 und die Verriegelungsansätze 17 durch den Abstreifring des Kunststoffspritzgußwerkzeugs wie durch einen Trichter ziehen lassen. Als "Abschrägung" in der Herstellungsstellung im Längsschnitt gesehen wird auch eine "Abrundung" in der Herstellungsstellung im Längsschnitt gesehen im Zusammenhang mit der Mantelaußenfläche 13 des Sicherheitsrings 10 höhenmäßig mindestens in deren oberem Bereich und der Seite 20 mindestens eines Verriegelungsansatzes 17 gesehen. Falls die Seite 20 mindestens eines Verriegelungsansatzes 17 mit einer Abschrägung in der Herstellungsstellung im Längsschnitt gesehen von unten nach oben von der Außenfläche 18 ausgehend in Richtung auf die Schwenklinie der Filmscharnierverbindung 27 dieses Verriegelungsansatzes 17 mindestens abschnittsweise gebogen verläuft, werden zur Bestimmung des Winkels in bezug auf die Längsmittelachse L - L der obere Endpunkt und der untere Endpunkt als imaginäre Punkte und eine Linie (zeichnerisch nicht dargestellt) als durch diese imaginären Punkte verlaufend angenommen. In der Herstellungsstellung können im Längsschnitt gesehen die Abschrägung der Mantelaußenfläche 13 und die axial verlaufende Mantelaußenfläche 13 des Sicherheitsrings 10 und/oder die Abschrägung der Seite 20 und die axial verlaufende Außenfläche 18 mindestens eines Verriegelungsansatzes 17 durch Kantenbildung oder übergangslos ineinander übergehen. Als "Teile" des Garantieverschlusses 1 werden alle Einzelteile bezeichnet, aus denen er sich zusammensetzt, z.B. der Mantel der Verschlußkappe 2 , die obere Wand 6 der Verschlußkappe 2 , das Innengewinde 7 der Verschlußkappe 2 , die Griffrippe 9 , der Mantel des Sicherheitsrings 10 , die Filmscharnierverbindung 27 , der bzw. die Abstandhalter z.B. 33; 34 , die Verbindungsstelle 28 , die Sollbruchstelle 29 , der Schlitz 30 , der Verriegelungsansatz 17 usw. Der Garantieverschluß 1 kann einstückig ausgebildet sein. Der Garantieverschluß 1 kann aus Kunststoff, insbesondere Polypropylen oder Polyäthylen oder einem Werkstoff mit ähnlichen physikalischen Eigenschaften hergestellt sein. Vorzugsweise ist ein relativ harter, insbesondere mittelharter bis harter Kunststoff mit geringerer Dehnung zur Herstellung des Garantieverschlusses 1 vorgesehen. Ein gesondert ausgebildetes Dichtmittel z.B. 8 (beispielsweise Dichtungseinlage, Dichtmasse usw.) ist vorzugsweise aus relativ weichem Kunststoff (beispielsweise PVC, PE oder EVA basierender Dichtmasse usw.) hergestellt. Innerhalb des Sektors I kann die Oberfläche 45 im Längsschnitt gesehen eine mehr oder weniger stark gekrümmte Steigung bis zum Totpunkt -T- bilden und innerhalb des Sektors II kann die Oberfläche 45 vom Totpunkt -T- ab ein mehr oder weniger stark gekrümmtes Gefälle bis zu einem Punkt -P- bilden. Im Längsschnitt gesehen kann an den Punkt -P- innerhalb des Sektors II eine schwächere konkave oder schwächere konvexe Krümmung der Oberfläche 45 als die Krümmung der Oberfläche 45 zwischen dem Totpunkt -T- und dem Punkt -P- oder eine gerade Oberfläche 45 anschließen (vgl. z.B. Fig. 10, 11 und 14 hinsichtlich einer längsschnittmäßig geraden, an die längsschnittmäßig gekrümmte Oberfläche 45 anschließenden Oberfläche 45 ). Wenn in den Ausführungen von gekrümmter,gerader usw. Oberfläche 45 die Rede ist, so handelt es sich um eine längsschnittmäßige Krümmung, längsschnittmäßig gerade Ausbildung usw. (entspricht der Bezeichnung "im Längsschnitt gesehen"), auch wenn dies in den Ausführungen im einzelnen nicht immer erwähnt wird. Die Axialbewegung relativ zwischen dem Betätigungsteil, insbesondere dem Stempel 48 und dem jeweiligen Verriegelungsansatz 17 kann durch Hubbewegung nach unten des Stempels 48 oder einer anderweitigen Einrichtung (zeichnerisch nicht dargestellt) oder nach oben der Vorrichtung, auf welcher der Garantieverschluß 1 fixiert ist, durchgeführt werden. Das Betätigungsteil kann ringförmig ausgebildet sein. Das Betätigungsteil kann eine zylindrische Form aufweisen. Der Radius der Oberfläche 45 zur Längsmittelachse des Betätigungsteils, insbesondere zur Längsmittelachse L - L des Stempels 48 ist bezogen auf eine beliebige imaginäre Umfangslinie der Oberfläche 45 bevorzugt an jeder Stelle dieser imaginären Umfangslinie gleich. Wenn von der Oberfläche 45 , den Oberflächenabschnitten 45a; 45b , den Segmenten z.B. 46 , Zwischenräumen z.B. 47 usw. die Rede ist, so kann es sich, sofern dies durch den Zusammenhang nicht ausgeschlossen ist, um den Stempel 48 oder das Teil z.B. 44 der Einrichtung (zeichnerisch nicht dargestellt) handeln. Die Innenbohrung (zeichnerisch nicht dargestellt) des Stempels 48 kann zur Aufnahme einer mit der Einbringung einer Dichtungseinlage z.B. 8 oder der Dichtmasse (Compound) in Verbindung stehenden Einrichtung (zeichnerisch nicht dargestellt) vorgesehen sein. Die Innenbohrung (zeichnerisch nicht dargestellt) des Stempels 48 kann zylindrisch ausgeformt sein. Denkbar ist auch jede andere geometrische Form.

Das Werkzeug kann zum relativen Umklappen von Ansätzen oder dgl. an insbesondere Garantieverschlüssen für Behälter vorgesehen sein. Vorzugsweise weist das Werkzeug ein die Ansätze übergreifendes pilzhutförmig ausgebildetes Betätigungsteil auf, dessen den Ansätzen in Gebrauchslage zugewandte Pilzhutunterseite eine wenigstens für einen Teilbereich des relativen Umklappvorganges mindestens abschnittsweise als Gleitfläche wirkende Auskehlung aufweist. Die Ansätze können als Verriegelungsansätze

EP 0 270 621 B1

17 ausgebildet sein.

Wenn in den Ausführungen von "Verriegelungsansätzen" 17 gesprochen wird, so kann es sich gleichermaßen um "Ansätze" handeln, wenngleich zur Vereinfachung in den Ausführungen im einzelnen nicht weiter darauf eingegangen wird. Bevorzugt ist das Werkzeug zum relativen Umklappen der Verriegelungsansätze 17 des Garantieverschlusses 1 aus der Herstellungsstellung in die Verriegelungsstellung vorgesehen. Das Betätigungsteil des Werkzeugs kann als eine das Teil z.B. 44 enthaltende Einrichtung (zeichnerisch nicht dargestellt) ausgebildet sein. Vorzugsweise ist das Betätigungsteil des Werkzeugs als Stempel 48 ausgebildet. Das Teil z.B. 44 kann in dem Bereich des Stempels 48 imaginär angenommen werden, in dem die i.F.e. Profils in den Stempel 48 eingearbeitete Oberfläche 45 vorgesehen ist. Dabei wird die Längsmittelachse des Teils z.B. 44 als mit der Längsmittelachse L - L des Stempels 48 übereinstimmend und das Teil z.B.44 als imaginär angenommen, auch wenn zur Vereinfachung in den Ausführungen im einzelnen nicht weiter darauf eingegangen wird. Die Auskehlung der Pilzhutunterseite kann i.F.e. im Teil z.B. 44 ausgebildeten Oberfläche 45 vorgesehen sein. Die Auskehlung der Pilzhutunterseite kann i.F.e. als Profil in den Stempel 48 eingearbeiteten (z.B. eingefrästen) Oberfläche 45 vorgesehen sein. Bevorzugt ist die Oberfläche 45 wenigstens für einen Teilbereich des relativen Umklappvorganges mindestens abschnittsweise zum relativen Zusammenwirken mit der Verriegelungsflanke 21 des jeweiligen Verriegelungsansatzes 17 vorgesehen. Als Oberfläche 45 wird diese durch Auskehlung der Pilzhutunterseite gebildete Fläche bezeichnet, welche sich teilweise nach innen gerichtet in den Stempel 48 erstreckt. Das gilt gleichermaßen sowohl für die als Oberfläche 45 des Teils z.B. 44 bezeichnete Fläche, als auch für die Oberflächenabschnitte 45a; 45b . Das Teil z.B. 44 wird mit "z.B." bezeichnet, da es sowohl imaginär in dem Bereich des Stempels 48 , in dem die i.F.e. Profils in den Stempel 48 eingearbeitete Oberfläche 45 vorgesehen ist, angenommen werden, als auch unabhängig vom Stempel 48 eine das Teil z.B. 44 enthaltende Einrichtung (zeichnerisch nicht dargestellt) vorgesehen sein kann. Die Oberfläche 45 kann im Längsschnitt gesehen i.d.R. mindestens im wesentlichen in einer der Form einer Kurve bzw. eines Kurvenabschnitts entsprechenden Grundform verlaufen. Als Längsschnitt bzw. längsschnittmäßig kann der durch die Längsmittelachse des Betätigungsteils verlaufende Axialschnitt bezeichnet werden.Als Längsschnitt bzw.längsschnittmäßig kann der durch die Längsmittelachse L - L des Stempels 48 verlaufende Axialschnitt bezeichnet werden. Die Oberfläche 45 kann im Längsschnitt gesehen i.d.R. mindestens im wesentlichen in einer der Form einer -arabischen "1"- entsprechenden Grundform verlaufen (vgl. z.B. Fig. 13). Die Oberfläche 45 kann im Längsschnitt gesehen i.d.R. mindestens im wesentlichen in einer der Form einer -arabischen "2" ohne den an ihrem unteren Ende quer verlaufenden Fußstrich- entsprechenden Grundform verlaufen (vgl. z.B. Fig. 10, 11, 14 und 15). Die Oberfläche 45 kann im Längsschnitt gesehen mindestens abschnittsweise gerade oder konkav oder konvex gewölbt verlaufen. Mindestens ein Oberflächenabschnitt 45a und/oder 45b kann bzw. können im Längsschnitt gesehen mindestens abschnittsweise gerade oder konkav oder konvex gewölbt verlaufen. Die Oberfläche 45 kann im Längsschnitt gesehen mindestens abschnittsweise in einer beliebigen geometrischen Form, z.B. ellipsen- oder parabel- oder sinus- oder hyperbel- oder kreisabschnittsförmig oder ovalabschnittsförmig usw. verlaufen. Mindestens ein Oberflächenabschnitt 45a und/oder 45b kann bzw. können im Längsschnitt gesehen mindestens abschnittsweise in einer beliebigen geometrischen Form, z.B. ellipsen- oder parabel- oder sinus- oder hyperbel- oder kreisabschnittsförmig oder ovalabschnittsförmig usw.verlaufen.Mindestens zwei im Längsschnitt gesehen untereinander unterschiedliche Abschnitte der Oberfläche 45 können im Längsschnitt gesehen ineinander übergehen, insbesondere übergangslos ineinander übergehen.

Mindestens zwei im Längsschnitt gesehen untereinander unterschiedliche Abschnitte mindestens eines Oberflächenabschnitts 45a und/oder 45b können im Längsschnitt gesehen ineinander übergehen, insbesondere übergangslos ineinander übergehen. Es würde den Rahmen der Ausführungen sprengen, auf jede denkbare geometrische Form der Oberfläche 45 bzw. der Oberflächenabschnitte 45a ; 45b einzugehen, deshalb erfolgt an dieser Stelle der Hinweis, daß alle denkbaren geometrischen Formen der Oberfläche 45 bzw. der Oberflächenabschnitte 45a; 45b im Rahmen der Erfindung vorgesehen sind, auch wenn aus dem zuvor genannten Grund im einzelnen in den Ausführungen nicht weiter darauf eingegangen wird. Die Wölbung der Oberfläche 45 kann im Längsschnitt gesehen mindestens abschnittsweise progressiv verlaufen. Mindestens zwei Abschnitte der Oberfläche 45 können im Längsschnitt gesehen zueinander abgewinkelt oder abgebogen verlaufen. Im Längsschnitt gesehen können mindestens zwei untereinander unterschiedliche abschnittsweise Wölbungen und/oder mindestens eine abschnittsweise Wölbung und mindestens ein abschnittsweise gerader Verlauf der Oberfläche 45 ineinander übergehen, insbesondere übergangslos ineinander übergehen (vgl. z.B. Fig. 10, 11 und 14 hinsichtlich im Längsschnitt gesehen einer abschnittsweisen Wölbung und eines in die abschnittsweise Wölbung übergehenden abschnittsweise geraden Verlaufes der Oberfläche 45). Übergangsloses Ineinanderübergehen jeweils zweier Abschnitte der Oberfläche 45 bedeutet, daß jeweils ein Abschnitt als Verlängerung des anderen Abschnitts ausgebildet ist.

14

Das gilt gleichermaßen auch für die Oberflächenabschnitte 45a und 45b . Je nach Ausbildung läßt sich der jeweilige Übergangspunkt z.B. -P- , -N- nicht einwandfrei erkennen. In diesem Fall läßt sich der jeweilige Übergangspunkt zwischen den Abschnitten der Oberfläche 45 bzw. den Oberflächenabschnitten 45a; 45b frei bestimmen. Das gilt gleichermaßen, wenn der Übergang der Oberfläche 45 bzw. des Oberflächenabschnitts bzw. der Oberflächenabschnitte 45a und/oder 45b in die Aussenfläche 48a des Stempels 48 übergangslos vorgesehen ist. Bevorzugt setzt sich die Oberfläche 45 des Betätigungsteils, insbesondere des Stempels 48 aus den Oberflächenabschnitten 45a und 45b zusammen (vgl. z.B. Fig. 11 und 13 bis 15). Eine im Längsschnitt gesehen abschnittsweise konkave Wölbung des Oberflächenabschnitts 45a ist beispielsweise angebracht, wenn diese in dem Bereich liegt, in welchem relativ die Verriegelungsflanke 21 des jeweiligen Verriegelungsansatzes 17 mit dem Oberflächenabschnitt 45 in Berührung kommt und der restliche Oberflächenabschnitt 45a im Längsschnitt gesehen gerade verläuft (zeichnerisch nicht dargestellt), da bei insgesamt im Längsschnitt gesehen geradem Verlauf des Oberflächenabschnitts 45a dessen Winkel -$\beta$- so stumpf sein müßte, daß eine prozentuale Beschädigung der Verriegelungsansätze 17 sich nicht verhindern ließe. Dabei kann im Längsschnitt gesehen dieser restliche gerade verlaufende Oberflächenabschnitt 45a beliebig, z.B. mit einer Steigung oder einem Gefälle in Richtung zur Längsmittelachse des Betätigungsteils, insbesondere in Richtung zur Längsmittelachse L - L des Stempels 48 verlaufen. Der restliche gerade verlaufende Oberflächenabschnitt 45a läßt sich auch durch eine schwächere oder stärkere Krümmung an Stelle des geraden Verlaufes ersetzen, usw. Die Wölbung des Oberflächenabschnitts 45a kann im Längsschnitt gesehen mindestens abschnittsweise progressiv verlaufen. Ein im Längsschnitt gesehen gerader Verlauf des Oberflächenabschnitts 45a wäre beispielsweise gegeben, wenn der Oberflächenabschnitt 45a zwischen den Punkten -O- und -P- entsprechend der imaginären Linie C - C verliefe. Mindestens zwei Abschnitte des Oberflächenabschnitts 45a können im Längsschnitt gesehen zueinander abgewinkelt oder abgebogen verlaufen. Die Wölbung des Oberflächenabschnitts 45b kann im Längsschnitt gesehen mindestens abschnittsweise progressiv verlaufen. Mindestens zwei Abschnitte des Oberflächenabschnitts 45b können im Längsschnitt gesehen zueinander abgewinkelt oder abgebogen verlaufen. Bevorzugt erstreckt sich im Längsschnitt gesehen die Oberfläche 45 zwischen den Punkten -O- und -N- (vgl. z.B. Fig. 11 und 13 bis 15). Vorzugsweise erstreckt sich im Längsschnitt gesehen der Oberflächenabschnitt 45a zwischen den Punkten -O- und -P- (vgl. z.B. Fig. 11 und 13 bis 15). Bevorzugt erstreckt sich im Längsschnitt gesehen der Oberflächenabschnitt 45b zwischen den Punkten -P- und -N- (vgl. z.B. Fig. 11 und 13 bis 15). Vorzugsweise ist im Längsschnitt gesehen der Punkt -N- unterhalb des Punktes -P- angeordnet (vgl. z.B. Fig. 11 und 13 bis 15).Im Längsschnitt gesehen kann der Punkt -P- oberhalb des Punktes -O-angeordnet sein (vgl. z.B. Fig. 13). Bevorzugt ist im Längsschnitt gesehen der Punkt -P- unterhalb des Punktes -O- angeordnet (vgl. z.B. Fig. 11, 14 und 15). Vorzugsweise ist im Längsschnitt gesehen der Punkt -P- möglichst tief unterhalb des Punktes -O- angeordnet, damit der jeweilige Verriegelungsansatz 17 durch die relative Hubbewegung möglichst tief nach unten transportiert wird. Im Längsschnitt gesehen kann der Punkt -P- in Höhe des Punktes -O- angeordnet sein (zeichnerisch nicht dargestellt). Im Längsschnitt gesehen kann die durch die Punkte -O- und -P- verlaufende imaginäre Linie C - C mit einer Steigung von links nach rechts zur Längsmittelachse des Betätigungsteils, insbesondere zur Längsmittelachse L - L des Stempels 48 verlaufen (vgl. z.B. Fig. 13). Vorzugsweise verläuft im Längsschnitt gesehen die durch die Punkte -O- und -P- verlaufende imaginäre Linie C - C mit einem Gefälle von links nach rechts zur Längsmittelachse des Betätigungsteils, insbesondere zur Längsmittelachse L - L des Stempels 48 (vgl. z.B. Fig. 14 und 15). Dieser Verlauf der imaginären Linie C - C wird als vorteilhaft angenommen, da hier der jeweilige Verriegelungsansatz 17 durch die relative Hubbewegung ausreichend tief nach unten transportiert wird und das relative Umklappen der Verriegelungsansätze 17 gewährleistet ist. Im Längsschnitt gesehen kann die durch die Punkte -O- und -P- verlaufende imaginäre Linie C - C im rechten Winkel zur Längsmittelachse des Betätigungsteils, insbesondere zur Längsmittelachse L - L des Stempels 48 verlaufen (zeichnerisch nicht dargestellt). Bevorzugt erstreckt sich im Längsschnitt gesehen die Oberfläche 45 vom Punkt -O- ausgehend in Richtung zur Längsmittelachse des Betätigungsteils, insbesondere in Richtung zur Längsmittelachse L - L des Stempels 48 und von einem bestimmten Punkt ab von oben nach unten in Richtung zum unteren Ende des Betätigungsteils, insbesondere in Richtung zur Unterseite 49 des Stempels 48 (vgl. z.B. Fig. 11 und 13 bis 15). Vorzugsweise verläuft im Längsschnitt gesehen der Oberflächenabschnitt 45a mindestens abschnittsweise mit einer Steigung in Richtung zur Längsmittelachse des Betätigungsteils, insbesondere in Richtung zur Längsmittelachse L - L des Stempels 48 .

Bevorzugt verläuft im Längsschnitt gesehen der Oberflächenabschnitt 45a abschnittsweise mit einem Gefälle in Richtung zur Längsmittelachse des Betätigungsteils, insbesondere in Richtung zur Längsmittelachse L - L des Stempels 48 . Vorzugsweise verläuft im Längsschnitt gesehen der Oberflächenabschnitt 45b mit einem Gefälle (vgl. z.B. Fig. 11 und 13 bis 15). Im Längsschnitt gesehen kann die durch die Punkte -O- und -P- verlaufende imaginäre Linie C - C in einem Winkel -$\beta$- von insbesondere 30° bis 50° zur Längsmittelachse des Betätigungsteils, insbesondere zur Längsmittelachse L - L des Stempels 48 angeordnet sein. Im Längsschnitt gesehen kann die durch die Punkte -P- und -N- verlaufende imaginäre Linie D - D in einem Winkel -$\gamma$- von insbesondere 65° bis 75° zur Längsmittelachse des Betätigungsteils, insbesondere zur Längsmittelachse L - L des Stempels 48 angeordnet sein. Im Längsschnitt gesehen kann die durch die Punkte -O-und -P- verlaufende imaginäre Linie C - C in einem Winkel -$\delta$- von insbesondere 55° bis 85° zu der durch die Punkte -P- und -N- verlaufenden imaginären Linie D - D angeordnet sein. Im Längsschnitt gesehen kann der Oberflächenabschnitt 45b mindestens abschnittsweise parallel zur Längsmittelachse des Betätigungsteils, insbesondere zur Längsmittelachse L - L des Stempels 48 verlaufen (zeichnerisch nicht dargestellt). Bevorzugt gehen im Längsschnitt gesehen der Oberflächenabschnitt 45a und der Oberflächenabschnitt 45b im Punkt -P- ineinander über, insbesondere übergangslos ineinander über.

Vorzugsweise gehen im Längsschnitt gesehen der Oberflächenabschnitt 45b und die Aussenfläche 48a des Stempels 48 im Punkt -N- ineinander über, beispielsweise übergangslos ineinander über (vgl. z.B. Fig. 15 hinsichtlich des übergangslosen Ineinanderübergehens). Vorzugsweise wird im Längsschnitt gesehen infolge der im Winkel -$\beta$- verlaufenden Linie C - C und damit der Lage der Punkte -O- und -P- und entsprechender Krümmung des Oberflächenabschnitts 45a ein Totpunkt -T- auf dem Oberflächenabschnitt 45a herausgebildet (vgl. z.B. Fig. 11, 14 und 15). Diese Ausführungsformen werden als bevorzugt angesehen, da hier der jeweilige Verriegelungsansatz 17 durch die relative Hubbewegung weiter nach unten transportiert wird und das relative Umklappen der Verriegelungsansätze 17 in jedem Fall auch bei höchsten Geschwindigkeiten gewährleistet ist.

Im Längsschnitt gesehen kann dieser Kreisabschnitt des Oberflächenabschnitts 45a halbkreisförmig oder in etwa halbkreisförmig ausgebildet sein. Diese Ausführungsform wird als vorteilhaft angesehen, da hier der jeweilige Verriegelungsansatz 17 im Längsschnitt gesehen durch die relative Hubbewegung über den Punkt -P- hinaus nach unten transportiert wird und auch die relative Gleitbewegung der Flankenkuppe 21 des jeweiligen Verriegelungsansatzes 17 für optimal gehalten wird. Im Längsschnitt gesehen kann der beidseits des Totpunkts -T- innerhalb der Sektoren I und II zwischen den Punkten -O-und -P- als Kreisabschnitt verlaufende Oberflächenabschnitt 45a einen Radius -r- zwischen insbesondere 3 mm und 8 mm aufweisen. Der Radius -r- kann gleich der oder größer oder kleiner als die Höhe -h- des jeweiligen Verriegelungsansatzes 17 sein. Im Längsschnitt gesehen kann die Krümmung des Oberflächenabschnitts 45a mit einem steilen Anstieg links des Totpunktes -T- innerhalb des Sektors I mindestens abschnittsweise innerhalb der Krümmung des Oberflächenabschnitts 45a bis zum Totpunkt -T- flacher werdend, insbesondere progressiv flacher werdend und rechts des Totpunktes -T- innerhalb des Sektors II vom Totpunkt -T- ab mindestens abschnittsweise bis zum Punkt -P- mit einem flacher werdenden, insbesondere progressiv flacher werdenden Gefälle ausgebildet sein. Im Längsschnitt gesehen kann innerhalb des Sektors I der Oberflächenabschnitt 45a eine mehr oder weniger stark gekrümmte Steigung bis zum Totpunkt -T- und innerhalb des Sektors II der Oberflächenabschnitt 45b ein mehr oder weniger stark gekrümmtes Gefälle bis zum Punkt -P- bilden. Im Längsschnitt gesehen kann an den Punkt -P- innerhalb des Sektors II eine schwächere konvexe oder konkave Krümmung des Oberflächenabschnitts 45b als die Krümmung des Oberflächenabschnitts 45a oder ein gerader Oberflächenabschnitt 45b oder ein aus diesen Oberflächenabschnitten kombinierter Oberflächenabschnitt 45b anschließen (vgl. z.B. Fig. 11 und 14 hinsichtlich im Längsschnitt gesehen eines geraden an den Punkt -P- anschließenden Oberflächenabschnitts 45b ). Bei dem Ausführungsbeispiel nach z.B. Fig. 15 schließt im Längsschnitt gesehen an eine konkave Krümmung eines oberen Abschnitts des Oberflächenabschnitts 45 übergangslos eine konvexe Krümmung eines unteren Abschnitts des Oberflächenabschnitts 45b an und die konvexe Krümmung des unteren Abschnitts des Oberflächenabschnitts 45b geht übergangslos in die Stempelaußenfläche 48a des Stempels 48 über. Der Oberflächenabschnitt 45b kann mindestens in seinem unteren Bereich mindestens abschnittsweise von einem im Längsschnitt gesehen imaginären Punkt ab als Andrückfläche für den jeweiligen Verriegelungsansatz 17 vorgesehen sein. "Andrückfläche" bedeutet in diesem Zusammenhang, daß je nach Ausführungsform dieser Oberflächenabschnitt 45b mindestens abschnittsweise bei der nach oben gehenden Hubbewegung des Betätigungsteils, insbesondere des Stempels 48 die Verriegelungsflanke 21 des jeweiligen Verriegelungsansatzes 17 an ihr abgleiten läßt und damit den Verriegelungsansatz 17 in die Verriegelungsstellung überführt. Dabei wirkt es sich natürlich günstig aus, wenn der Oberflächenabschnitt 45b im Bereich der Andrückfläche in einem möglichst spitzen Winkel zur Längsmittelachse des Betätigungsteils, insbesondere zur Längsmittelachse L - L des Stempels 48 verläuft, wie dies z.B. in den Fig. 10, 11, 14 und 15 zeichnerisch dargestellt ist. Bei dem Ausführungsbeispiel nach z.B. Fig. 15 kann durch den konkav-konvexen Verlauf des Oberflächenabschnitts 45b die Andrückfläche in einem noch spitzeren Winkel zur Längsmittelachse des Betätigungsteils, insbesondere zur Längsmittelachse L - L des Stempels 48 verlaufen als bei den Ausführungsbeispielen nach z.B. Fig. 10, 11 und 14. Auch die Andrückfläche ist eine Gleitfläche i.S.d. relativen Gleitvorganges der Verriegelungsflanke 21 des jeweiligen Verriegelungsansatzes 17 . Im Längsschnitt gesehen kann der Oberflächenabschnitt 45a gleich lang wie oder kürzer oder länger als der Oberflächenabschnitt 45b sein. Im Längsschnitt gesehen kann das Betätigungsteil, insbesondere der Stempel 48 im Punkt -O- (Durchmesser zwischen den Punkten O - O) den größten Durchmesser aufweisen.Im Längsschnitt gesehen kann das Betätigungsteil, insbesondere der Stempel 48 im Punkt -P- (Durchmesser zwischen den Punkten P - P) den kleinsten Durchmesser aufweisen (vgl. z.B. Fig. 13). Bevorzugt weist im Längsschnitt gesehen das Betätigungsteil, insbesondere der Stempel 48 oberhalb des Punktes -P- (Durchmesser zwischen den Punkten P - P) den kleinsten Durchmesser auf (vgl. z.B. Fig. 11, 14 und 15). Bevorzugt weist im Längsschnitt gesehen das Betätigungsteil, insbesondere der Stempel 48 im Punkt -N- (Durchmesser zwischen den Punkten N - N) einen kleineren Durchmesser als im Punkt -O- und einen grösseren Durchmesser als im Punkt -P- auf. Im Längsschnitt gesehen kann das Betätigungsteil, insbesondere der Stempel 48 im Punkt -P- (Durchmesser zwischen den Punkten P - P) einen dem Durchmesser im Punkt -N- (Durchmesser zwischen den Punkten N - N) entsprechenden oder größeren Durchmesser aufweisen. Im Längsschnitt gesehen kann das Betätigungsteil, insbesondere der Stempel 48 unterhalb des Punktes -N- (Durchmesser zwischen den Punkten N - N) höhenmäßig mindestens abschnittsweise einen kleineren oder größeren Durchmesser als oder insbesondere den gleichen Durchmesser wie im Punkt -N- aufweisen und/oder oberhalb des Punktes -O- (Durchmesser zwischen den Punkten O - O) höhenmäßig mindestens abschnittsweise den gleichen Durchmesser wie oder einen kleineren oder insbesondere größeren Durchmesser als im Punkt -O- aufweisen. Im Längsschnitt gesehen kann die Flankenkuppe 21 des jeweiligen Verriegelungsansatzes 17 entlang der Oberfläche 45 in entgegengesetzter Richtung zum Punkt -O- relativ bis zu dem auf der Oberfläche 45 (dem Oberflächenabschnitt 45a und/oder dem Oberflächenabschnitt 45b ) liegenden Punkt transportiert werden, nach dessen Überschreiten der jeweilige Verriegelungsansatz 17 seinen eigenen Totpunkt überschritten hat und durch den ihm infolge seiner Ausbildung, Anordnung am Sicherheitsring 10 und insbesondere Abmessung seines Teilumfangs usw. innewohnenden Schwenkwiderstand selbsttätig in die Verriegelungsstellung übergeht. Diese Lösung eignet sich für die z.B. in Fig. 13 dargestellte Ausführungsform. Im Längsschnitt gesehen kann die Flankenkuppe 21 des jeweiligen Verriegelungsansatzes 17 entlang der Oberfläche 45 in entgegengesetzter Richtung zum Punkt -O- relativ bis zu dem auf der Oberfläche 45 (dem Oberflächenabschnitt 45a und/oder dem Oberflächenabschnitt 45b ) liegenden Punkt transportiert werden, nach dessen Überschreiten der jeweilige Verriegelungsansatz 17 seinen eigenen Totpunkt überschritten hat und sowohl durch den ihm infolge seiner Ausbildung, Anordnung am Sicherheitsring 10 und insbesondere Abmessung seines Teilumfangs usw. innewohnenden Schwenkwiderstand, als auch durch den als Andrückfläche wirkenden Oberflächenabschnitt 45b bzw. Abschnitt des Oberflächenabschnitts 45b in die Verriegelung übergeht. Im Längsschnitt gesehen kann die Flankenkuppe 21 des jeweiligen Verriegelungsansatzes 17 entlang der Oberfläche 45 in entgegengesetzter Richtung zum Punkt -O- relativ bis in die Verriegelungsstellung des jeweiligen Verriegelungsansatzes 17 transportiert werden. Das Betätigungsteil kann jede denkbare geometrische Form aufweisen. Es würde jedoch den Rahmen der Ausführungen sprengen, auf alle geometrischen Formen einzugehen. Deshalb erfolgt an dieser Stelle der Hinweis, daß alle denkbaren geometrischen Formen im Rahmen der Erfindung vorgesehen sind, auch wenn aus dem vorstehend genannten Grund im einzelnen in den Ausführungen nicht weiter darauf eingegangen wird. Vorzugsweise weist der Stempel 48 höhenmäßig eine mindestens abschnittsweise zylindrische Form auf. Der Stempel 48 kann eine mindestens im wesentlichen zylindrische Form aufweisen. Der Stempel 48 kann jede denkbare geometrische Form aufweisen.Es würde jedoch den Rahmen der Ausführungen sprengen, auf alle geometrischen Formen einzugehen. Deshalb erfolgt an dieser Stelle der Hinweis, daß alle denkbaren geometrischen Formen im Rahmen der Erfindung vorgesehen sind, auch wenn aus dem vorstehend genannten Grund im einzelnen in den Ausführungen nicht weiter darauf eingegangen wird. Das Betätigungsteil, insbesondere der Stempel 48 kann verschiedene Außendurchmesser aufweisen.

Vorzugsweise ist im Längsschnitt gesehen der Außendurchmesser des Betätigungsteils, insbesondere des Stempels 48 in Höhe bzw. oberhalb des Punktes -O- größer als der Außendurchmesser der Verriegelungsansätze 17 (vgl. z.B. Fig. 10). Bevorzugt ist im Längsschnitt gesehen der Außendurchmesser des Betätigungsteils, insbesondere des Stempels 48 in Höhe bzw. unterhalb des Punktes -N- kleiner als der Innendurchmesser zwischen den Flankenkuppen des Innengewindes 7 des Garantieverschlusses 1 (vgl. z.B. Fig. 10).Bevorzugt wird im Längsschnitt gesehen eine durch die Punkte O - O verlaufende imaginäre Linie bei jedem beliebigen durch die Längsmittelachse des Betätigungsteils, insbesondere durch die Längsmittelachse L - L des Stempels 48 verlaufenden Längsschnitt im rechten Winkel zur Längsmittelachse des Betätigungsteils, insbesondere im rechten Winkel zur Längsmittelachse L - L des Stempels 48 verlaufend angenommen. Bevorzugt ist das Betätigungsteil beidseits einer in der Draufsicht gesehen durch seine Längsmittelachse verlaufenden und es in zwei gleiche Teile halbierenden imaginären Linie symmetrisch

EP 0 270 621 B1

ausgebildet. Vorzugsweise ist der Stempel 48 beidseits einer in der Draufsicht gesehen durch seine Längsmittelachse L - L verlaufenden und ihn in zwei gleiche Teile halbierenden imaginären Linie E - E symmetrisch ausgebildet. Bevorzugt ist der Stempel 48 rotationssymmetrisch ausgebildet. Bevorzugt ist die in dem Betätigungsteil ausgebildete Oberfläche 45 gleichmäßig rundumlaufend vorgesehen. Vorzugsweise ist die in den Stempel 48 in Form eines Profils eingearbeitete Oberfläche 45 gleichmäßig rundumlaufend ausgebildet. Die in dem Teil z.B. 44 ausgebildete Oberfläche 45 kann innerhalb ihrer Höhe mindestens abschnittsweise umfangsmäßig in mehrere Segmente z.B. 46 aufgeteilt sein. Die in den Stempel 48 i.F.e. Profils eingearbeitete Oberfläche 45 kann innerhalb ihrer Höhe mindestens abschnittsweise umfangsmäßig in mehrere Segmente z.B. 46 aufgeteilt sein (vgl. z.B. Fig. 10 bis 12). Zwischen mindestens bzw. jeweils zwei Segmenten z.B. 46 kann mindestens bzw. jeweils ein Zwischenraum z.B. 47 vorgesehen sein (vgl. z.B. Fig. 12). Vorzugsweise ist mindestens ein Zwischenraum z.B. 47 i.F.e. über einen Abstand -a- von der Oberfläche 45 ausgehend in den Stempel 48 sich erstreckenden Einbuchtung in den Stempel 48 eingelassen (vgl. z.B. Fig. 11). Bevorzugt ist die Oberfläche 45 gegenüber dem unteren Ende des Betätigungsteils, insbesondere der Unterseite 49 des Stempels 48 höhenmäßig nach oben versetzt angeordnet (vgl. z.B. Fig. 10).

Die in den Stempel 48 i.F.e. Profils eingearbeitete Oberfläche 45 kann in einer derartigen Höhe innerhalb des Stempels 48 angeordnet sein, daß mindestens das relative Umklappen der Verriegelungsansätze 17 gewährleistet ist. Vorzugsweise ist die in den Stempel 48 i.F.e. Profils eingearbeitete Oberfläche 45 in einem derartigen Abstand zur Unterseite 49 des Stempels 48 angeordnet, daß sowohl das relative Umklappen der Verriegelungsansätze 17 als auch eine Funktion der Unterseite 49 des Stempels 48 gewährleistet sind. Im Längsschnitt gesehen kann der Punkt -O- in einem Abstand von insbesondere 13 mm bis 16 mm zum unteren Ende des Betätigungsteils, insbesondere zur Unterseite 49 des Stempels 48 angeordnet sein. Eine Funktion der Unterseite 49 des Stempels 48 kann durch das Einlegen einer Dichteinlage (Dichtscheibe) oder das Stempeln von Dichtmasse (Compound) zur Dichtung in den Garantieverschluß 1 , usw., gegeben sein. Der Stempel 48 läßt sich mit jedem beliebigen Arbeitsschritt kombinieren, beispielsweise dem Bedrucken der Garantieverschlüsse 1 , usw. Im Längsschnitt gesehen kann die Unterseite 49 des Stempels 48 in Höhe des Punktes -P- verlaufen und somit die Verbindung P - P zwischen den Punkten -P- bilden (zeichnerisch nicht dargestellt).

Diese Ausführungsmöglichkeit schließt i.d.R. die Verwendung des Stempels 48 als Mehrfunktionsstempel aus. Im Längsschnitt gesehen kann die Unterseite 49 des Stempels 48 in Höhe des Punkte -N- verlaufen und somit die Verbindung N - N zwischen den Punkten -N- bilden (zeichnerisch nicht dargestellt). Bevorzugt verläuft im Längsschnitt gesehen die Unterseite 49 des Stempels 48 unterhalb des Punktes -N- (vgl. z.B. Fig. 10).

Diese Ausführungsmöglichkeit wird in bezug auf die Ausbildung des Stempels als Mehrfunktionsstempel als optimal angesehen. Die Unterseite 49 des Stempels 48 kann unabhängig von der Oberfläche 45 jede beliebige geometrische Form aufweisen, beispielsweise im Längsschnitt gesehen mindestens abschnittsweise gerade, mindestens abschnittsweise gebogen, im Übergangsbereich zur Außenfläche 48a abgerundet, usw. I.d.R. verläuft die Unterseite 49 des Stempels 48 im Längsschnitt gesehen gerade und im rechten Winkel zur Längsmittelachse L - L des Stempels 48 . Es würde den Rahmen der Ausführungen sprengen, auf alle denkbaren geometrischen Formen der Unterseite 49 des Stempels 48 einzugehen. Der Stempel 48 kann eine insbesondere axial sich erstreckende Innenbohrung (zeichnerisch nicht dargestellt) aufweisen. Die Innenbohrung (zeichnerisch nicht dargestellt) kann mit einer zur Erzeugung eines Vakuums geeigneten Vorrichtung in Verbindung stehen. Es besteht die Möglichkeit, daß die Unterseite 49 des Stempels 48 geheizt und die Stempelwandung gekühlt (Innen- oder Außenkühlung) ist. Das Werkzeug kann unabhängig vom relativen Umklappen der Verriegelungsansätze 17 aus der Herstellungsstellung in die Verriegelungsstellung auch für beliebige andere bzw. ähnlich gelagerte Zwecke Verwendung finden. Bevorzugt ist das Betätigungsteil der Einrichtung (zeichnerisch nicht dargestellt) i.V.m. der Einrichtung (zeichnerisch nicht dargestellt) aus einem beliebigen, eine ausreichende Festigkeit aufweisenden Material, bzw. aus beliebigen, eine ausreichende Festigkeit aufweisenden Materialien,gefertigt. Vorzugsweise ist das Betätigungsteil der Einrichtung (zeichnerisch nicht dargestellt) i.V.m. der Einrichtung (zeichnerisch nicht dargestellt) aus einem harten Material bzw. harten Materialien, beispielsweise Metall, hartem Kunststoff usw. gefertigt. Bevorzugt ist der Stempel 48 aus einem beliebigen, eine ausreichende Festigkeit aufweisenden Material,bzw. aus beliebigen, eine ausreichende Festigkeit aufweisenden Materialien gefertigt. Vorzugsweise ist der Stempel 48 aus einem harten Material bzw. harten Materialien, insbesondere Metall, vorzugsweise gehärtetem Stahl,usw. gefertigt. Das Verfahren dient zum relativen Umklappen von Ansätzen oder dgl. an insbesondere Garantieverschlüssen für Behälter, insbesondere zum relativen Umklappen der Verriegelungsansätze 17 des Garantieverschlusses 1 aus der Herstellungstellung in die Verriegelungsstellung.

Vorzugsweise wird der Garantieverschluß 1 mit seiner Mündung auf die Oberfläche 45 des Betätigungs-

18

teils, insbesondere des Stempels 48 gerichtet an die das Betätigungsteil enthaltende Einrichtung (zeichnerisch nicht dargestellt), insbesondere den Stempel 48 durch eine Transporteinrichtung, insbesondere auf einem Fließband herangeführt und durch die Axialbewegung relativ zwischen der das Betätigungsteil enthaltenden Einrichtung (zeichnerisch nicht dargestellt) und dem Garantieverschluß 1 , insbesondere Hubbewegung nach unten des Stempels 48 werden die Verriegelungsansätze 17 relativ aus der Herstellungstellung in die Verriegelungsstellung umgeklappt. Das relative Umklappen der Verriegelungsansätze 17 des Garantieverschlusses 1 durch die Oberfläche 45 des Stempels 48 läßt sich z.B. mit der Einbringung einer durch die Unterseite 49 des Stempels 48 in den Garantieverschluß 1 eingelegten und ggf. an der Innenfläche der oberen Wand 6 des Garantieverschlusses 1 festgeklebten Dichtungseinlage (Dichtmittel z.B. 8 ) oder des durch Dichtmasse (Compound) herausgebildeten Dichtmittels z.B. 8 , insbesondere als Dichtmittel dergestalt eingestempelten Dichtmasse (Compound), daß zuerst die granulatförmige Dichtmasse in den Garantieverschluß 1 eingebracht und anschließend durch die Unterseite 49 des Stempels 48 zur Dichtung heißgestempelt wird oder daß zuerst die erhitzte flüssige Dichtmasse (Compound) auf die Innenfläche der oberen Wand 6 der Verschlußkappe 2 getropft oder gespritzt und anschließend durch die Unterseite 49 des Stempels 48 entsprechend zur Dichtung gestempelt wird, kombinieren.

Alle zuvor aufgeführten Ausführungsformen lassen sich auch, sofern dies durch den Zusammenhang nicht ausgeschlossen ist, entsprechend beliebig miteinander kombinieren. Die zeichnerisch dargestellten Ausführungsformen des neuerungsgemäßen Garantieverschlusses 1 sind nicht an die in den schaubildlichen Darstellungen aufgezeigten Abmessungen gebunden, sondern lassen sich in je nach Erfordernis beliebigen Abmessungen (z.B. DIN-Normen) herstellen. Die Geometrie und Dimensionierung des Garantieverschlusses 1 bzw. dessen Garantieverschlußteile lassen sich je nach Erfordernis, insbesondere zur besseren Anpassung an Behälter beliebig verwirklichen. Verwendungsmöglichkeiten, welche lediglich Maßnahmen baulicher Art erfordern, lassen sich beliebig erweitern. Alle im Rahmen der Beschreibung und der Figurenbeschreibung beschriebenen Merkmale werden als zum Gegenstand der Erfindung gehörig angesehen. Alle Erfindungsmerkmale werden als erfindungswesentlich im Sinne der Patentansprüche angesehen. Die Erfindung ist nicht auf die schaubildlich dargestellten und beschriebenen Ausführungsbeispiele beschränkt. Sie umfaßt auch alle fachmännischen Abwandlungen und Weiterbildungen, sowie Teil- und Unterkombinationen der beschriebenen und/oder dargestellten Merkmale und Maßnahmen. Der erfindungsgemäße, in einem Arbeitsgang der maschinellen Verschraubung (Verkappung) auf den Flaschenhals aufbringbare neuerungsgemäße vorzugsweise einstückig ausgebildete Garantieverschluß 1 , bei dem zugleich in der Verriegelungsstellung selbsttätig auch die Garantiesicherung erfolgt, wird allen an ihn gestellten Anforderungen gleichermaßen gerecht, er ist für beliebige Behälter, unabhängig von deren Inhalt, insbesondere für die im Umlauf befindlichen genormten Flaschen anwendbar und läßt sich auf herkömmlichen mit hoher Betriebsgeschwindigkeit arbeitenden Verschließmaschinen verwenden, er bewältigt die bei Glasflaschen infolge der Ovalitäten herstellungsmäßig bedingten großen Toleranzen, er zeichnet sich durch eine ordnungsgemäße Funktion und konstruktiv einfachen Aufbau aus (die Herstellung des neuerungsgemäßen Garantieverschlusses 1 durch einfache, den Ausstoß in Axialrichtung gewährleistende Spritzgußwerkzeuge ist möglich), er ist manipulationssicher (der Sicherheitsring 10 macht eine Manipulation unmöglich oder erschwert sie zumindest so sehr, daß deren Spuren für den Käufer auch in größerer Entfernung deutlich sichtbar sind), er verhindert das Entstehen von Ausschuß bei der maschinellen Verschraubung (Verkappung) und demzufolge daraus resultierende Unterbrechungen in der Abfüllanlage, weiterhin sorgt die Möglichkeit der Ausbildung von Verbindungsstellen 28 für einen guten Materialfluß zwischen der Verschlußkappe 2 und dem Sicherheitsring 10 während des Spritzvorganges, durch die Herstellung des Garantieverschlusses 1 aus Kunststoff treten keine Fingerverletzungen auf, ferner ist er durch den konstruktiv einfachen Aufbau kostengünstig in großen Mengen herstellbar, usw.

## Verzeichnis der Bezugszeichen

Der Garantieverschluß 1 , die Flasche 39 und der Stempel 48 sind durch Doppel-Zickzackpfeile gekennzeichnet, deren Pfeilspitzen auf diese hinweisen, sie aber nicht berühren. Die Verschlußkappe 2 , der Sicherheitsring 10 und das Teil z.B. 44 sind durch Zickzackpfeile gekennzeichnet, deren Pfeilspitzen auf diese hinweisen, sie aber nicht berühren. Die obere Wand 6 der Verschlußkappe 2 , der Abschnitt 11 des Sicherheitsrings 10 , der als Steg ausgebildete Abschnitt 12 des Sicherheitsrings 10 , der Verriegelungsansatz 17 , der Abstandhalter z.B. 33; 34 , der als Rippe ausgebildete Abstandhalter 33; 34 , der Transferring 42 und das Segment z.B. 46 sind durch Pfeile gekennzeichnet, deren Spitzen diese berühren. Der Hals 41 der Flasche 39 , der Zwischenraum z.B. 47 und die Oberfläche 45 sind durch Pfeile gekennzeichnet, deren Spitzen diese nicht berühren. Die Mantelaußenfläche 3 der Verschlußkappe 2 , die Mantelinnenfläche 4 der

19

Verschlußkappe 2 , die Unterseite 5 der Verschlußkappe 2 , das Innengewinde 7 der Verschlußkappe 2 , das Dichtmittel z.B. 8 der Verschlußkappe 2 , die Griffrippe 9 der Verschlußkappe 2 , die Mantelaußenfläche 13 des Sicherheitsrings 10 bzw. Abschnitts 11 bzw. als Steg ausgebildeten Abschnitts 12 des Sicherheitsrings 10 , die Mantelinnenfläche 14 des Sicherheitsrings 10 bzw. Abschnitts 11 bzw. als Steg ausgebildeten Abschnitts 12 des Sicherheitsrings 10 , die Seite 15 des Sicherheitsrings 10 bzw. Abschnitts 11 bzw. als Steg ausgebildeten Abschnitts 12 des Sicherheitsrings 10 , die Außenfläche 18 des Verriegelungsansatzes 17 , die Innenfläche 19 des Verriegelungsansatzes 17 , die Seite 20 des Verriegelungsansatzes 17 , die Verriegelungsflanke 21 des Verriegelungsansatzes 17 , die Randseite 22 des Verriegelungsansatzes 17 , die Filmscharnierverbindung 27 , die Verbindungsstelle 28 , die Sollbruchstelle 29 , die Anschlaglinie des Abstandhalters z.B. 38 , das Außengewinde 40 der Flasche 39 , die Unterseite 43 des Transferrings 42 , die Oberflächenabschnitte 45a; 45b , die Außenfläche 48a des Stempels 48 und die Unterseite 49 des Stempels 48 sind durch Linien gekennzeichnet, die diese berühren. Der Schlitz 30 und der Schlitz 31 sind durch Linien gekennzeichnet, die in diese hineinreichen.

| | |
|---|---|
| Garantieverschluß | 1 |
| Verschlußkappe | 2 |
| Mantelaußenfläche der Verschlußkappe | 3 |
| Mantelinnenfläche der Verschlußkappe | 4 |
| Unterseite der Verschlußkappe | 5 |
| obere Wand der Verschlußkappe | 6 |
| Innengewinde der Verschlußkappe | 7 |
| Dichtmittel | z.B. 8 |
| Griffrippe | 9 |
| Sicherheitsring | 10 |
| Abschnitt des Sicherheitsrings | 11 |
| als Steg ausgebildeter Abschnitt des Sicherheitsrings | 12 |
| Mantelaußenfläche des Sicherheitsrings bzw. Abschnitts des Sicherheitsrings bzw. als Steg ausgebildeten Abschnitts des Sicherheitsrings | 13 |
| Mantelinnenfläche des Sicherheitsrings bzw. Abschnitts des Sicherheitsrings bzw. als Steg ausgebildeten Abschnitts des Sicherheitsrings | 14 |
| Seite des Sicherheitsrings bzw. Abschnitts des Sicherheitsrings bzw. als Steg ausgebildeten Abschnitts des Sicherheitsrings | 15 |
| Verriegelungsansatz | 17 |
| Außenfläche des Verriegelungsansatzes | 18 |
| Innenfläche des Verriegelungsansatzes | 19 |
| Seite des Verriegelungsansatzes | 20 |
| Verriegelungsflanke des Verriegelungsansatzes | 21 |
| Randseite des Verriegelungsansatzes | 22 |
| Höhe des Verriegelungsansatzes | -h- |

| | |
|---|---|
| Filmscharnierverbindung | 27 |
| Verbindungsstelle | 28 |
| Sollbruchstelle | 29 |
| Schlitz | 30 |
| Schlitz | 31 |
| Abstandhalter | z.B. 33; 34 |
| als Rippe ausgebildeter Abstandhalter | 33; 34 |
| Anschlaglinie des Abstandhalters | z.B. 38 |
| Flasche bzw. oberer Teil der Flasche | 39 |
| Außengewinde der Flasche | 40 |
| Hals der Flasche | 41 |
| Transferring | 42 |
| Unterseite des Transferrings | 43 |
| größter Außendurchmesser des Transferrings | $-d_1-$ |
| kleinster Außendurchmesser des Transferrings | $-d_2-$ |
| Teil | z.B. 44 |
| Oberfläche | 45 |
| Oberflächenabschnitt | 45a; 45b |
| imaginärer Sektor | I |
| imaginärer Sektor | II |
| Totpunkt | $-T-$ |
| Linie | B - B |
| Punkt | $-P-$ |
| Radius | $-r-$ |
| Segment | z.B. 46 |
| Zwischenraum | z.B. 47 |
| Breite des Segmentes | $-b-$ |
| Stempel | 48 |
| Abstand | $-a-$ |
| Unterseite des Stempels | 49 |
| Außenfläche des Stempels | 48a |
| Längsmittelachse des Garantieverschlusses | L - L |
| Längsmittelachse der Flasche | L - L |
| Längsmittelachse des Stempels | L - L |
| Linien | A - A |
| | C - C |
| | D - D |
| | E - E |
| | F - F |
| Punkte | $-O-$ |
| | $-N-$ |
| Winkel | $-\alpha-$ |
| | $-\beta-$ |
| | $-\gamma-$ |
| | $-\delta-$ |

## Patentansprüche

1. Einstückiger Garantieverschluß (1) mit einer auf einen mit einem Gegengewinde versehenen Behälterhals aufschraubbaren, mit einem komplementär zum Gegengewinde des Behälterhalses angeordneten

EP 0 270 621 B1

Innengewinde (7) und mit einem zur Abdichtung der Behältermündung vorgesehenen, ggf. gesondert ausgebildeten Dichtmittel (z.B. 8) versehenen Verschlußkappe (2) und mit einem an die Verschlußkappe (2) nach unten anschließenden, mindestens abschnittsweise von der Verschlußkappe (2) abreißbar vorgesehenen und/oder aufreißbar ausgestalteten Sicherheitsring (10) und mit mindestens einem an den unteren Endbereich des Sicherheitsringes (10) über eine Filmscharnierverbindung (27) nach unten anschließenden, zwecks Untergreifens eines unterhalb des Gegengewindes angeordneten Transferrings des Behälterhalses nach innen einschwenkbaren Verriegelungsansatz (17), wobei mindestens ein Verriegelungsansatz (17) in der nach innen eingeschwenkten Stellung über mindestens eine Anlageeinrichtung gegen den Sicherheitsring (10) abgestützt ist, dadurch gekennzeichnet, daß die Abstützung oberhalb der Filmscharnierverbindung (27) erfolgt und in einem -bezogen auf die Höhe des Verriegelungsansatzes (17)- wesentlichen Abstand von der Filmscharnierverbindung (27) endet.

2. Garantieverschluß nach Anspruch 1 , gekennzeichnet durch folgende Merkmale:
   a) In der Herstellungsstellung im Längsschnitt gesehen weist mindestens eine Anlageeinrichtung mindestens einen verjüngten Übergangsbereich des Sicherheitsrings (10) und/oder mindestens eines Verriegelungsansatzes (17) auf;
   b) In der Herstellungsstellung im Längsschnitt gesehen verläuft der Übergangsbereich in Richtung auf die Schwenklinie der Filmscharnierverbindung (27) und schließt sich innenseitig und/oder außenseitig an die Filmscharnierverbindung (27) an.

3. Garantieverschluß nach Anspruch 2 , dadurch gekennzeichnet, daß in der Herstellungsstellung im Längsschnitt gesehen sich der Übergangsbereich allmählich verjüngt.

4. Garantieverschluß nach einem der Ansprüche 2 bis 3 , dadurch gekennzeichnet, daß in der Herstellungsstellung im Längsschnitt gesehen die Verjüngung des Übergangsbereiches gebildet ist, indem
   a) dessen innen verlaufende Seite (15; 20) von der Innenfläche (14; 19) des Garantieverschlusses (1) ausgehend in einem Winkel zur Außenfläche (13; 18) des Garantieverschlusses (1) schräg in Richtung auf die Schwenklinie der Filmscharnierverbindung (27) verläuft und an die Innenseite der Filmscharnierverbindung (27) anschließt
   b) und/oder dessen außen verlaufende Seite (20) von der Außenfläche (18) des Garantieverschlusses (1) ausgehend in einem Winkel zur Innenfläche (19) des Garantieverschlusses (1) schräg in Richtung auf die Schwenklinie der Filmscharnierverbindung (27) verläuft und an die Außenseite der Filmscharnierverbindung (27) anschließt.

5. Garantieverschluß nach einem der Ansprüche 2 bis 4 , dadurch gekennzeichnet, daß sich der Übergangsbereich mindestens über einen Teilumfang des Verriegelungsansatzes (17) erstreckt.

6. Garantieverschluß nach einem der Ansprüche 1 bis 5 , gekennzeichnet durch folgende Merkmale:
   a) Mindestens eine Anlageeinrichtung weist mindestens eine auf der Innenfläche (19) mindestens eines Verriegelungsansatzes (17) des Garantieverschlusses (1) angeordnete Rippe (33; 34) auf;
   b) In der Herstellungsstellung im Längsschnitt gesehen erstreckt sich die Rippe (33; 34) mindestens abschnittsweise nach unten.

7. Garantieverschluß nach Anspruch 6 , dadurch gekennzeichnet, daß in der Herstellungsstellung im Längsschnitt gesehen die Rippe (34) von oben nach unten sich verbreiternd ausgebildet ist.

8. Garantieverschluß nach einem der Ansprüche 6 bis 7 , dadurch gekennzeichnet, daß in der Herstellungsstellung im Längsschnitt gesehen die Rippe (34) von insbesondere dem unterhalb des der Filmscharnierverbindung (27) gelegenen Bereiches des Verriegelungsansatzes (17) ausgeht oder als Verlängerung der Fläche (20) des Verriegelungsansatzes (17) gebildet ist.

9. Garantieverschluß nach einem der Ansprüche 1 bis 8 , dadurch gekennzeichnet, daß in der Herstellungsstellung im Längsschnitt gesehen die Filmscharnierverbindung (27) mit mindestens einer Fläche (14; 19) fluchtend angeordnet ist und/oder mindestens eine Seite (15; 20) gerade verläuft.

10. Garantieverschluß nach einem der Ansprüche 1 bis 9 , dadurch gekennzeichnet, daß in der Herstellungsstellung im Längsschnitt und von innen gesehen mindestens eine in Richtung auf die Schwenklinie der Filmscharnierverbindung (27) verlaufende Innenfläche (14; 19) des Garantieverschlusses (1) an

22

die Innenseite der Filmscharnierverbindung (27) anschließt.

11. Garantieverschluß nach einem der Ansprüche 1 bis 10 , dadurch gekennzeichnet, daß

a) in der Herstellungsstellung im Längsschnitt gesehen die sich an die Innenseite der Filmscharnierverbindung (27) anschließende Seite (20) des Übergangsbereiches des Verriegelungsansatzes (17) eine als nach unten gerichtete imaginäre Verlängerung der Mantelinnenfläche (14) des Sicherheitsrings (10) des Garantieverschlusses (1) angenommene Linie (F - F) nicht nach innen überschreitet bzw. entsprechend dieser Linie verläuft

b) und/oder in der Herstellungsstellung im Längsschnitt gesehen die Rippe (33; 34) eine als nach unten gerichtete imaginäre Verlängerung der Mantelinnenfläche (14) des Sicherheitsrings (10) des Garantieverschlusses (1) angenommene Linie (F - F) nicht nach innen überschreitet bzw. entsprechend dieser Linie verläuft.

12. Garantieverschluß nach einem der Ansprüche 1 bis 11 , dadurch gekennzeichnet, daß in der Herstellungsstellung im Längsschnitt gesehen sich mindestens ein Verriegelungsansatz (17) axial nach unten oder in bezug auf die Längsmittelachse (L - L) des Garantieverschlusses (1) in einem Winkel nach außen abgespreizt nach unten erstreckt.

13. Garantieverschluß nach einem der Ansprüche 1 bis 12 , gekennzeichnet durch folgende Merkmale:

a) In der Herstellungsstellung gesehen ist die Verriegelungsflanke (21) mindestens eines Verriegelungsansatzes (17) in Umfangsrichtung des Garantieverschlusses (1) mindestens abschnittsweise von unten nach oben konkav eingewölbt bzw. eingebuchtet;

b) Die abschnittsweise Einwölbung der Verriegelungsflanke (21) ist insbesondere

a) kreisabschnittsförmig ausgebildet,

b) in Umfangsrichtung des Garantieverschlusses (1) mittig des Verriegelungsansatzes (17) vorgesehen.

14. Garantieverschluß nach einem der Ansprüche 1 bis 13 , dadurch gekennzeichnet, daß mindestens ein Verriegelungsansatz (17) in Umfangsrichtung des Garantieverschlusses (1) abschnittsweise mittig oder an einem seiner äußeren Enden und in der Herstellungsstellung im Längsschnitt gesehen an seinem unteren Ende eine von seiner Innenfläche (19) ausgehend schräg von oben nach unten auf seine Außenfläche (18) zulaufende Verriegelungsflanke (21) aufweist.

15. Garantieverschluß nach einem der Ansprüche 1 bis 14 , gekennzeichnet durch folgende Merkmale:

a) Der Sicherheitsring (10) ist in mindestens zwei Abschnitte (11) untergliedert;

b) Mindestens ein Abschnitt (11) des Sicherheitsrings (10) ist je Abschnitt (11) zwischen jeweils zwei durch jeweils einen in Umfangsrichtung des Garantieverschlusses (1) verlaufenden Schlitz (31) miteinander verbundene Schlitze (30) herausgebildet und über mindestens einen innerhalb des Schlitzes (31) angeordneten, über mindestens einen Teil dessen Länge sich erstreckenden Materialfilm mit der Verschlußkappe (2) verbunden;

c) Mindestens ein Schlitz (30) weist mindestens einen über mindestens einen Teil seiner Höhe sich erstreckenden Materialfilm auf;

d) Mindestens ein Materialfilm ist als Verbindungsstelle (28) und mindestens ein Materialfilm ist als Sollbruchstelle (29) ausgebildet.

16. Garantieverschluß nach einem der Ansprüche 1 bis 15 , gekennzeichnet durch folgende Merkmale:

a) Je Abschnitt (11) ist je ein Verriegelungsansatz (17) vorgesehen;

b) Der Verriegelungsansatz (17) erstreckt sich in Umfangsrichtung des Garantieverschlusses (1) mindestens abschnittsweise über den Abschnitt (11);

c) In Umfangsrichtung des Garantieverschlusses (1) sind je Schlitz (31) zwei in gleichem Abstand zur Mitte des Schlitzes (31) angeordnete Verbindungsstellen (28) oder eine mittig des Schlitzes (31) oder im Bereich eines Schlitzes (30) angeordnete Verbindungsstelle (28) vorgesehen;

d) In Umfangsrichtung des Garantieverschlusses (1) sind die Abstände zwischen den Randseiten (22) des Verriegelungsansatzes(17)und den diesen zugeordneten Schlitzen (30) gleich oder der Verriegelungsansatz (17) erstreckt sich abschnittsweise zwischen mindestens einer Verbindungsstelle (28) und mindestens einem Schlitz (30).

17. Garantieverschluß nach einem der Ansprüche 1 bis 16 , dadurch gekennzeichnet, daß mindestens zwei

23

EP 0 270 621 B1

sich jeweils über einen Teil des Umfangs des Garantieverschlusses (1) erstreckende, einander gleiche Bestandteile des Garantieverschlusses (1) gleichförmig ausgebildet und gleichförmig über den Umfang des Garantieverschlusses (1) verteilt angeordnet sind.

18. Garantieverschluß nach einem der Ansprüche 1 bis 17 , dadurch gekennzeichnet, daß der Garantieverschluß (1) aus vorzugsweise relativ hartem, insbesondere mittelhartem bis hartem Kunststoff mit geringerer Dehnung, insbesondere Polyäthylen oder Polypropylen oder einem Werkstoff mit ähnlichen physikalischen Eigenschaften hergestellt ist.

19. Zum aus der Herstellungsstellung nach innen gerichteten Einschwenken von Verriegelungsansätzen od. dgl. an insbesondere Garantieverschlüssen vorgesehenes Werkzeug, insbesondere nach einem der Ansprüche 1 bis 18 , dadurch gekennzeichnet, daß das Werkzeug ein die Verriegelungsansätze (17) übergreifendes, im wesentlichen pilzhutförmig ausgebildetes Betätigungsteil, insbesondere einen Stempel(48)aufweist,dessen den Verriegelungsansätzen(17) od. dgl. in Gebrauchslage zugewandte, mindestens im wesentlichen pilzhutförmig ausgebildete Unterseite (Pilzhutunterseite) einen wenigstens für einen Teil des Einschwenkvorganges mindestens abschnittsweise für die Verriegelungsansätze (17) od. dgl. bzw. für die Verriegelungsflanken (21) der Verriegelungsansätze (17) od. dgl. als Gleitfläche dienenden Teilbereich mit einer bei einer aufeinander zu gerichteten Relativbewegung des Betätigungsteiles, insbesondere des Stempels (48) und des Garantieverschlusses (1) eine nach innen und unten gerichtete Kraft ausübenden Auskehlung mit einer Oberfläche (45) bzw. Oberflächenabschnitten (45a; 45b) aufweist, so daß bei einer aufeinander zu gerichteten Relativbewegung des Betätigungsteiles, insbesondere des Stempels (48) und des Garantieverschlusses (1) die Verriegelungsansätze (17) od. dgl. nach innen eingeschwenkt werden und bei der nachfolgenden entgegengesetzten Relativbewegung des Betätigungsteiles, insbesondere des Stempels (48) und des Garantieverschlusses (1) die Verriegelungsansätze (17) od. dgl. in der nach innen eingeschwenkten Stellung verbleiben.

20. Werkzeug nach Anspruch 19 , gekennzeichnet durch folgende Merkmale:
a) Im Längsschnitt gesehen weist die Auskehlung einen Steigungssektor (I) auf;
b) Im Längsschnitt gesehen ist die Oberfläche (45) der Auskehlung durch Endpunkte (-O-) und (-N-) begrenzt und setzt sich aus dem durch den Endpunkt (-O-) und einen Punkt (-P-) begrenzten Oberflächenabschnitt (45a) und dem durch den Punkt (-P-) und den Punkt (-N-) begrenzten Oberflächenabschnitt (45b) zusammen oder im Längsschnitt gesehen wird die Oberfläche (45) der Auskehlung durch einen Endpunkt (-O-) und einen Punkt (-P-) begrenzt und geht in die Unterseite des Betätigungsteiles (Unterseite (49) des Stempels (48)) über;
c) Im Längsschnitt gesehen verläuft die Oberfläche (45) bzw. mindestens ein Oberflächenabschnitt (45a; 45b) der Oberfläche (45) mindestens abschnittsweise in einer oder mehreren der folgenden geometrischen Formen:
Kurvenförmig (parabelabschnittsförmig; sinusabschnittsförmig; ellipsenabschnittsförmig; kreisabschnittsförmig; progressiv verlaufend; degressiv verlaufend; konkav gewölbt verlaufend; konvex gewölbt verlaufend); gerade.

21. Werkzeug nach Anspruch 20 , dadurch gekennzeichnet, daß im Längsschnitt gesehen der Steigungssektor (I) außenseitig gelegen ist und über einen Totpunkt (-T-) hinweg in einen innenseitig gelegenen Gefällesektor (II) übergeht.

22. Werkzeug nach einem der Ansprüche 20 bis 21 , gekennzeichnet durch folgende Merkmale:
a) Im Längsschnitt gesehen ist der Endpunkt (-N-) unterhalb des Punktes (-P-) angeordnet;
b) Im Längsschnitt gesehen weist die Auskehlung im Endpunkt (-O-) (Durchmesser zwischen den Endpunkten (O - O)) den größten Durchmesser auf;
c) Im Längsschnitt gesehen weist die Auskehlung im Endpunkt (-N-) (Durchmesser zwischen den Endpunkten (N - N)) einen kleineren Durchmesser als im Endpunkt (-O-) und einen größeren Durchmesser als im Punkt (-P-) auf.

23. Werkzeug nach einem der Ansprüche 19 bis 22 , dadurch gekennzeichnet, daß im Längsschnitt gesehen die Oberfläche (45) mindestens im wesentlichen in einer der Form einer
-arabischen "2" ohne ihren an ihrem unteren Ende quer verlaufenden Fußstrichentsprechenden Grundform verläuft.

24

24. Werkzeug nach einem der Ansprüche 19 bis 22 , dadurch gekennzeichnet, daß im Längsschnitt gesehen die Oberfläche (45) mindestens im wesentlichen in einer der Form einer

-arabischen "1"-

entsprechenden Grundform verläuft.

25. Werkzeug nach einem der Ansprüche 19 bis 24 , dadurch gekennzeichnet, daß im Längsschnitt gesehen der Oberflächenabschnitt (45b) mindestens in seinem unteren Bereich als von einer oberen Begrenzung ausgehende, mindestens abschnittsweise nach unten sich erstreckende Andrückfläche für den jeweiligen Verriegelungsansatz (17) bzw. dessen Verriegelungsflanke (21) vorgesehen ist.

26. Werkzeug nach einem der Ansprüche 19 bis 25 , dadurch gekennzeichnet, daß die Auskehlung in einem derartigen Abstand nach oben versetzt zur Unterseite des Betätigungsteiles (Unterseite (49) des Stempels (48)) angeordnet ist, daß sowohl das relative Einschwenken der Verriegelungsansätze (17) nach innen, als auch die Erfüllung einer Funktion der Unterseite des Betätigungsteiles (Unterseite (49) des Stempels (48)), insbesondere das Einbringen einer Dichtungseinlage (Dichtmittel (z.B. 8)) oder von Dichtmasse (Compound) in den Garantieverschluß (1) gewährleistet sind.

## Claims

1. An integrally formed tamper-proof closure (1) having a closure cap (2) with an internal matching thread (7) and being screwable onto a complementary helical counter thread of a container neck, said closure cap (2) being provided with a sealing means (e.g. 8) -if need be, specifically formed- for sealing the container mouth, said tamper-proof closure (1) having a safety ring (10) downwardly attached to the closure cap (2), said safety ring (10) being provided detachable for getting torn off the closure cap (2) at least sectionally and/or being fracturable embodied, capable of being torn open, said tamper-proof closure (1) having at least one locking catch (17) downwardly attached to the lower terminal area of the safety ring (10) via a film hinge connection (27), said locking catch (17) being swivable inwards for the purpose of engaging under a transfer ring of the container neck positioned beneath the complementary helical counter thread, at least one locking catch (17) in the inwardly swivelled position being propped by at least one stopping device against the safety ring (10), said tamper-proof closure (1) being characterised in that the propping takes place above the film hinge connection (27) and ends -relativ to the elevational height of the locking catch (17)- at a considerable distance from the film hinge connection (27).

2. A tamper-proof closure according to claim 1, characterised by the following features:
   a) Seen in moulded position and in elevational section, at least one stopping device features at least one reduced transitional area of the safety ring (10) and/or of at least one locking catch (17);
   b) Seen in moulded position and in elevational section, the transitional area proceeds in the direction of the swivelling line of the film hinge connection (27) and adjoins said film hinge connection (27) on the inside and/or on the outside thereof.

3. A tamper-proof closure according to claim 2, characterised in that seen in moulded position and in elevational section, the transitional area is reduced gradually.

4. A tamper-proof closure according to any one of claims 2 to 3, characterised in that seen in moulded position and in elevational section, the reducing ot the transitional area is formed while
   a) the side (15; 20) thereof proceeding on the inside, departs from the inner face (14; 19) of the tamper-proof closure (1) proceeding askew at an angle to the outer face (13; 18) of the tamper-proof closure (1) in the direction of the swivelling line of the film hinge connection (27), and adjoining the inside of said film hinge connection (27),
   b) and/or the side (20) thereof proceeding on the outside, departs from the outer face (18) of the tamper-proof closure (1) proceeding askew at an angle to the inner face (19) of the tamper-proof closure (1) in the direction of the swivelling line of the film hinge connection (27), and adjoining the outside of said film hinge connection (27).

5. A tamper-proof closure according to any one of claims 2 to 4, characterised in that the transitional area extends at least partly over a partial circumference of the locking catch (17).

**6.** A tamper-proof closure according to any one of claims 1 to 5, characterised by the following features:
a) At least one stopping device features at least one rib (33; 34) provided in the inner face (19) of at least one locking catch (17) of the tamper-proof closure (1);
b) Seen in moulded position and in elevational section, the rib (33; 34) extends at least sectionally downwards.

**7.** A tamper-proof closure according to claim 6, characterised in that seen in moulded position and in elevational section, the rib (34) widens from above downwards.

**8.** A tamper-proof closure according to any one of claims 6 to 7, characterised in that seen in moulded position and in elevational section, the rib (34) proceeds particularly from the area immediately situated beneath the film hinge connection (27), or is formed as an elongation of the side (20) of the locking catch (17).

**9.** A tamper-proof closure according to any one of claims 1 to 8, characterised in that seen in moulded position and in elevational section, the film hinge connection (27) is positioned in alignment with at least one face (14; 19) and/or at least one side (15; 20) runs straight.

**10.** A tamper-proof closure according to any one of claims 1 to 9, characterised in that seen in moulded position and in elevational section and, seen from the inside, at least one inner face (14; 19) proceeding in the direction of the swivelling line of the film hinge connection (27) adjoins the inner side of said film hinge connection (27).

**11.** A tamper-proof closure according to any one of claims 1 to 10, characterised in that
a) seen in moulded position and in elevational section, the side (20) of the transitional area of the locking catch (17), which side (20) adjoins the inside of the film hinge connection (27), inwards does not exeed a line (F - F) supposed as an imaginary elongation of the inner surface (14) of the peripheral skirt of the safety ring (10), or said side (20) proceeds along said line (F - F) respectively,
b) and/or seen in moulded position and in elevational section, the rib (33; 34) inwards does not exeed a line (F - F) supposed as an imaginary elongation of the inner surface (14) of the pheripheral skirt of the safety ring (10), or said rib (33; 34) proceeds along said line (F - F) respectively.

**12.** A tamper-proof closure according to any one of claims 1 to 11, characterised in that seen in moulded position and in elevational section, at least one locking catch (17) extends axially downwards, or is outwardly spread at an angle to the elevational central axis (L - L) of the tamper-proof closure (1), in downward extension.

**13.** A tamper-proof closure according to any one of claims 1 to 12, characterised by the following features:
a) Seen in moulded position, the barring flank (21) of at least one locking catch (17), in circumferential direction of the tamper-proof closure (1) at least sectionally, is concave arcuated or else indented from below upwards;
b) The sectional inward arching is particularly
a) shaped circle segmentary,
b) provided to be centrally within the partial circumference of the locking catch (17), in circumferential direction of the tamper-proof closure (1).

**14.** A tamper-proof closure according to any one of claims 1 to 13, characterised in that at least one locking catch (17), in circumferential direction of the tamper-proof closure (1), features sectionally a barring flank (21) centrally or at one distal end thereof and, seen in moulded position and in elevational section, at the inferior end thereof, said barring flank (21) proceeding askew from above downwards departing from the inner face (19) towards the outer face (18).

**15.** A tamper-proof closure according to any one of claims 1 to 14, characterised by the following features:
a) The safety ring (10) is divided into at least two sections (11);
b) One or several sections (11) of the safety ring (10) are embodied each between two respective slots (30) which are in contact with one another through a respective slot (31) proceeding in circumferential direction of the tamper-proof closure (1), said section (11) being joined via at least one material film to the closure cap (2), said material film being arranged within the slot (31) and extending at least partly over the length of said slot (31);

c) At least one slot (30) features at least one material film extending at least partly over the elevational height of said slot (30);

d) At least one material film is embodied as one connection point (28) and at least one material film is embodied as one fracture point (29).

16. A tamper-proof closure according to any one of claims 1 to 15, characterised by the following features:

a) Per section (11) at least one locking catch (17) is provided;

b) The locking catch (17),in circumferential direction of the tamper-proof closure (1), extends at least sectionally over the section (11);

c) In circumferential direction of the tamper-proof closure (1) two connection points (28) per slot (31) are arranged each point with the same distance to the middle of said slot (31), or one connection point (28) is arranged within said slot (31) centrally or in the area of one slot (30).

d) In circumferential direction of the tamper-proof closure (1) the distances between the side edges (22) of the locking catch (17) and the slots (30) allocated to said side edges (22) are equal, or the locking catch (17), in circumferential direction of the tamper-proof closure (1), extends sectionally between at least one connection point (28) and at least one slot (30).

17. A tamper-proof closure according to any one of claims 1 to 16, characterised in that at least two components of the tamper-proof closure (1) bearing each over a portion of the circumference of the tamper-proof closure (1) and being equal to each other, are uniformly embodied and regularly spaced apart over the circumference of the tamper-proof closure (1).

18. A tamper-proof closure according to any on of claims 1 to 17, characterised in that the tamper-proof closure (1) is preferred to be manufactured of relatively hard, particularly medium-hard to hard plastics of little elongation, particularly of polypropylene or polyethylene or a material of similar physical properties.

19. An implement, destined for the inward swivelling of locking catches or the like from the moulded position of particularly tamper-proof closures, in particular according to any one of claims 1 to 18, characterised in that the implement features an activating component, lapping over the locking catches (17), said implement being mainly fungiliform shaped, in particular a punch (48) whose at least mainly fungiliform shaped underside (pileus underside) facing the locking catches (17) or the like in the utilitarian position features a partial area serving as gliding surface at least for a part of the swivelling process at least sectionally for the locking catches (17) or the like, or else for the barring flanks (21) of the locking catches (17) or the like, said partial area having a grooving with a surface (45) or else with surface portions (45a; 45b), which grooving, with a relative movement of the activating component -particularly of the punch (48)- and of the tamper-proof closure (1) towards each other, exerts an inwardly and downwardly directed force, so that with a relative movement of said activating component -particularly of the punch (48)- and of the tamper-proof closure (1) the locking catches (17) or the like are inwardly swivelled and with the subsequent opposite relative moving-back of the activating component -particularly of the punch (48)- and of the tamper-proof closure (1) the locking catches (17) or the like remain in their inwardly swivelled position.

20. An implement according to claim 19, characterised by the following features:

a) Seen in elevational section, the grooving features an outside sector of ascent (I);

b) Seen in elevational section, the surface (45) of the grooving is bounded by end points (-O-) and (-N-) comprising the surface portion (45a) which is bounded by end point (-O-) and point (-P-), and comprising the surface portion (45b) which is bounded by point (-P-) and point (-N-), or seen in elevational section, the surface (45) of the grooving is bounded by end point (-O-) and point (-P-) and fuses into the bottom side of the activating component (the bottom side (49) of the punch (48));

c) Seen in elevational section, the surface (45) or else at least one surface portion (45a; 45b) proceeds at least sectionally in one or several of the following geometrical shapes:

curved (segmentary parabolic; segmentary sinoidal; segmentary elliptical; segmentary circular; proceeding in a progressive way; proceeding in a degressive way; proceeding concavely arched; proceeding convexly arched); straight.

21. An implement according to claim 20, characterised in that the sector of ascent (I) is positioned outside and changes past dead point (-T-) into an inside sector of descent (II).

**22.** An implement according to any one of claims 20 to 21, characterised by the following features:

a) Seen in elevational section, end point (-N-) is arranged to lie beneath point (-P-);

b) Seen in elevational section, the grooving at end point (-O-) (diameter between end points (O - O)) shows the greatest diameter;

c) Seen in elevational section, the grooving at end point (-N-) (diameter between end points (N - N)) shows a smaller diameter than at end point (-O-) and a greater diameter than at point (-P-).

**23.** An implement according to any one of claims 19 to 22, characterised in that seen in elevational section, the surface (45) at least mainly corresponds to the basic form of an

-Arabic number "2" omitting the aslant running footline at its lower end-.

**24.** An implement according to any one of claims 19 to 22, characterised in that seen in elevational section, the surface (45) at least mainly corresponds to the basic form of an

-Arabic number "1"-.

**25.** An implement according to any one of claims 19 to 24, characterised in that seen in elevational section, the surface portion (45b) at least at the lower end thereof is provided as a pressure face for the respective locking catch (17) or else for the barring flank (21) thereof, said pressure face proceeding from an upper terminating area at least sectionally extending downwards.

**26.** An implement according to any one of claims 19 to 25, characterised in that the grooving is arranged in such a distance shifted upwards as to the bottom side of the activating component (the bottom side (49) of the punch (48)) that both the relative swivelling of the locking catches (17) inwards and the performance of the function of the bottom side of the activating component (the bottom side (49) of the punch (48)), in particular the insertion of a sealing inset (sealing means (e.g. 8) of a sealing mass (compound) into the tamper-proof closure (1) are ensured.

**Revendications**

**1.** Boucbon inviolable (1) , réalisé en une seule pièce, muni d'un capuchon (2) filetable sur le goulot d'un récipient, ledit capuchon (2) présentant un filetage intérieur (7), qui est disposé complémentairement par rapport au filetage complémentaire du goulot du récipient, et muni d'un moyen d'étanchéité (p.ex. 8) pour le bouchage de l'orifice du récipient, présentant un moyen d'étanchéité (p.ex. 8) développé, le cas échéant, séparément; ledit bouchon inviolable (1) est muni d'une bague de sécurité (10) qui suit le capuchon (2) vers le bas et qui est au moins partiellement arrachable du capuchon et/ou prévue pour la déchirure; ledit bouchon inviolable (1) présente au moins une languette de verrouillage (17) qui se joint à la zone finale d'en bas de la bague de sécurité (10) à l'intermédiaire d'une connexion du film charnière (27) vers le bas; ladite languette de verrouillage (17) est orientable vers l'intérieur, afin de saisir une bague de transfert disposée au-dessous du filetage complémentaire du goulot du récipient; au moins une languette de verrouillage (17) -dans la position orientée vers l'intérieur- étant appuyée contre la bague de sécurité (10) à l'intermédiaire d'un dispositif de butée, caractérisé en ce que le support s' effectue au-dessus de la connexion du film charnière (27) et se termine dans une distance considérable -par rapport à la hauteur de la languette de verrouillage (17)- de la connexion du film charnière (27).

**2.** Bouchon inviolable selon la revendication 1, présentant les caractéristiques suivants:

a) Vu en position de fabrication et en coupe longitudinale, au moins un dispositif de butée présente au moins une zone de transition réduite de la bague de sécurité (10) et/ou d'au moins une languette de verrouillage (17);

b) Vue en position de fabrication et en coupe longitudinale, la zone de transition s'étend en direction de la ligne de conversion de la connexion du film charnière (27) et se joint à l'intérieur et/ou à l'extérieur de la connexion du film charnière (27).

**3.** Bouchon inviolable selon la revendication 2, caractérisé en ce que, vue en position de fabrication et en coupe longitudinale, la zone de transition se réduit graduellement.

4. Bouchon inviolable selon l'une quelconque des revendications 2 à 3, caractérisé en ce que, vue en position de fabrication et en coupe longitudinale, la réduction de la zone de transition se forme comme suit

a) dont le côté (15; 20) qui se trouve à l'intérieur partant de la surface interne (14; 19) du bouchon inviolable (1) s'étend en biais en direction de la ligne de conversion de la connexion du film charnière (27) dans un angle vers la surface externe (13; 18) du bouchon inviolable (1) et se joint à la face interne de la connexion du film charnière (27)

b) et/ou dont le côté (20) qui se trouve à l'extérieur partant de la surface externe (18) du bouchon inviolable (1) s'étend en biais en direction de la ligne de conversion de la connexion du film charnière (27) dans un angle vers la surface interne (19) du bouchon inviolable (1) et se joint à la face externe de la connexion du film charnière (27).

5. Bouchon inviolable selon l'une quelconque des revendications 2 à 4, caractérisé en ce que la zone de transition s'étend au moins sur un pourtour partiel de la languette de verrouillage (17).

6. Bouchon inviolable selon l'une quelconque des revendications 1 à 5, présentant les caractéristiques suivants:

a) Au moins un dispositif de butée présente au moins une nervure (33; 34) disposé sur la surface intérieure (19) d'au moins une languette de verrouillage (17) du bouchon inviolable (1);

b) Vue en position de fabrication et en coupe longitudinale, la nervure (33; 34) s'étend au moins partiellement vers le bas.

7. Bouchon inviolable selon la revendication 6, caractérisé en ce que, vue en position de fabrication et en coupe longitudinale, la nervure (34) est développée tout en s'élargissant, du haut en bas.

8. Bouchon inviolable selon l'une quelconque des revendications 6 à 7, caractérisé en ce que, vue en position de fabrication et en coupe longitudinale, la nervure (34) part en particulier du secteur qui est disposé au-dessous de la connexion du film charnière (27) de la languette de verrouillage (17) ou bien se forme en tant que prolongement de la surface (20) de la languette de verrouillage (17).

9. Bouchon inviolable selon l'une quelconque des revendications 1 à 8, caractérisé en ce que, vue en position de fabrication et en coupe longitudinale, la connexion du film charnière (27) est disposé en alignement précis avec au moins une surface (14; 19) et/ou un côté (15; 20) se développe de façon rectiligne.

10. Bouchon inviolable selon l'une quelconque des revendications 1 à 9, caractérisé en ce que, vue en position de fabrication et en coupe longitudinale et vue de l'intérieur, au moins une surface interne (14; 19) du bouchon inviolable (1) est disposée en direction de la ligne de conversion de la connexion du film charnière (27) et se joint à la surface interne de la connexion du film charnière (27).

11. Bouchon inviolable selon l'une quelconque des revendications 1 à 10, caractérise en ce que

a) vu en position de fabrication et en coupe longitudinale, le côté (20) de la zone de transition de la languette de verrouillage (17) qui se joint à la surface interne de la connexion du film charnière (27) ne dépasse pas vers l'intérieur une ligne (F - F) qui se comprend en tant que prolongement imaginaire de la surface interne (14) de la bague de sécurité (10) du bouchon inviolable (1), ou bien qui s'étend le long de celle-ci

b) et/ou vue en position de fabrication et en coupe longitudinale, la nervure (33; 34) ne dépasse pas vers l'intérieur une ligne (F - F) qui se comprend en tant que prolongement imaginaire de la surface interne (14) de la bague de sécurité (10) du bouchon inviolable (1), ou bien qui s'étend le long de celle-ci.

12. Bouchon inviolable selon l'une quelconque des revendications 1 à 11, caractérisé en ce que, vue en position de fabrication et en coupe longitudinale, au moins une languette de verrouillage (17) s'étend axialement vers le bas ou, par rapport à l'axe central médian (L - L) du bouchon inviolable (1) s'étend vers le bas tout en s'écartant vers l'extérieur dans un angle.

13. Bouchon inviolable selon l'une quelconque des revendications 1 à 12, présentant les caractéristiques suivants:

a) Vu en position de fabrication, le flanc de verrouillage (21) d'au moins une languette de verrouillage (17) est formée, dans le sens circonférentiel du bouchon inviolable (1) du bas en haut, au moins partiellement en cuvette ou bien dentelé;

b) La voûte partielle du flanc de verrouillage (21) est particulièrement

    a) développée en forme de cercle

    b) prévue au milieu de la languette de verrouillage (17) dans le sens circonférentiel du bouchon inviolable (1).

14. Bouchon inviolable selon l' une quelconque des revendications 1 à 13, caractérisé en ce qu'au moins une languette de verrouillage (17), dans le sens circonférentiel du bouchon inviolable (1), présente un flanc de verrouillage (21), partiellement central ou à une de ses extrémités: ledit flanc de verrouillage (21) s'étend, vu en position de fabrication et en coupe longitudinale, en biais du haut en bas, partant de la surface interne (19) vers la surface externe (18).

15. Bouchon inviolable selon l'une quelconque des revendications 1 à 14, présentant les caractéristiques suivants:

    a) La bague de sécurité (10) est divisée au moins en deux segments (11);

    b) Au moins un segment (11) de la bague de sécurité (10) est formé au moins un segment (11) entre chaque fois deux fentes (30) par l'intermédiaire d'une fente (31) respective qui s'étend dans le sens circonférentiel du bouchon inviolable (1); celle-ci étant reliée par l'intermédiaire d'au moins un film-matière qui est disposé à l'intérieur de cette fente (31), avec le capuchon (2) sur une partie de la longueur de ce film-matière;

    c) Au moins une fente (30) présente au moins un film-matière qui s'étend au moins sur une partie de sa hauteur;

    d) Au moins un film matière est développé en tant que point de jonction (28) et au moins un film matière est développé en tant que point destiné a la rupture (29).

16. Bouchon inviolable selon l'une quelconque des revendications 1 à 15, présentant les caractéristiques suivants:

    a) L'on prévoit une languette de verrouillage (17) par segment (11);

    b) La languette de verrouillage (17) s'étend dans le sens circonférentiel du bouchon inviolable (1) au moins partiellement sur le segment (11);

    c) Dans le sens circonférentiel du bouchon inviolable (1) on prévoit pour chaque fente (31) deux points de jonction (28) disposés à distance égale par rapport au milieu de la fente (31), ou un point de jonction (28) au milieu de la fente (31) ou dans l'étendue d'une fente (30);

    d) Dans le sens circonférentiel du bouchon inviolable (1) les distances entre les côtés latéraux (22) de la languette de verrouillage (17) et des fentes (30) qui leur sont coordonnées sont égales ou bien la languette de verrouillage (17) s'étend partiellement entre au moins un point de jonction (28) et au moins une fente (30).

17. Bouchon inviolable selon l'une quelconque des revendications 1 à 16, caractérisé en ce qu'au moins deux éléments égaux du bouchon inviolable (1) qui s'étendent chacun sur une partie du pourtour de celui-ci se présentent de même forme et sont disposées de même forme sur le pourtour du bouchon inviolable (1).

18. Bouchon inviolable selon l'une quelconque des revendications 1 à 17, caractérisé en ce que le bouchon inviolable (1) est réalisé de préférence en matière plastique relativement dure ou bien particulièrement entre une dureté moyenne et une dureté extrême, de faible extension, en particulier du polyéthylène ou du polypropylène ou d'une matière qui présente des propriétés physiques comparables.

19. Outil prévu pour la conversion vers l'intérieur des languettes de verrouillage etc. à partir de la position de fabrication, particulièrement sur des bouchons inviolables, particulièrement selon l'une quelconque des revendications 1 à 18, caractérisé en ce que l'outil présente une pièce d'actionnement, en particulier un sceau (48), qui dépasse les languettes de verrouillage (17) et qui présente considérablement la forme d'une tête de champignon; ledite pièce d'actionnement, en particulier ledit sceau (48) présente un côté bas qui est au moins considérablement en forme de tête de champignon (côté bas en forme de tête de champignon), laquelle est tournée vers les languettes de verrouillage (17) etc. en position d'emploi; ledit côté bas (côté bas en forme de tête de champignon) présente une zone partielle comportant une gorge qui présente une surface (45), ou bien des segments de surface (45a; 45b); ledite zone partielle sert au moins pendant une partie du procédé de conversion au moins partiellement aux languettes de verrouillage (17) etc., respectivement aux flancs de verrouillage (21) des languettes de verrouillage (17) etc. en tant que surface de glissement; ladite gorge exerce une force dirigée vers l'intérieur et vers le bas lors d'un mouvement relatif, dirigé l'un vers l'autre, de la pièce d'actionnement -particulièrement du sceau (48)- et du bouchon inviolable (1), de manière que lors d'un mouvement relatif, dirigé l'un vers l'autre, de la pièce d'actionnement -particulièrement du sceau (48)- et du bouchon inviolable (1) les languettes de verrouillage (17) etc. sont orientées vers l'intérieur, et lors du mouvement relatif opposé de la pièce d'actionnement qui suit -particulièrement du sceau (48)- et du bouchon inviolable (1) les languettes de verrouillage (17) etc. restent dans la position orientées vers l'intérieur.

**20.** Outil selon la revendication 19, présentant les caractéristiques suivants:

a) Vue en coupe longitudinale la gorge présente un secteur ascendant (I);

b) Vue en coupe longitudinale la surface (45) de la gorge est limité par des points finaux (-O-) et (-N-) et se compose de la surface (45a) limitée par le point final (-O-) et un point (-P-) et de la surface (45b) limité par le point (-P-) et le point (-N-) ou bien, vue en coupe longitudinale la surface (45) de la gorge qui est limitée par un point final (-O-) et un point (-P-) et se confond dans le côté bas de la pièce d'actionnement (côté bas (49) du sceau (48));

c) Vue en coupe longitudinale la surface (45) ou bien un segment (45a; 45b) de la surface (45) s'étend au moins partiellement en une ou plusieurs des formes géométriques suivantes:

en forme de courbe (en forme de segment de parabole; en forme de segment sinusoïdal; en forme de segment d'ellipse; en forme de segment de cercle; de manière progressive; de manière dégressive; voûtée de manière concave; voûtée de manière convexe); de façon rectiligne.

**21.** Outil selon la revendication 20, caractérisé en ce que, vu en coupe longitudinale le secteur ascendant (I) se trouve à l'extérieur et se confond par-dessus un point mort en secteur en pente (II) se trouvant à l'intérieur.

**22.** Outil selon l'une quelconque des revendications 20 à 21, présentant les caractéristiques suivants:

a) Vu en coupe longitudinale le point final (-N-) se trouve au-dessous du point (-P-);

b) Vue en coupe longitudinale la gorge présente dans le point final (-O-) (c'est-à-dire le diamètre entre les points finaux (O - O) ) le plus grand diamètre;

c) Vue en coupe longitudinale la gorge présente dans le point final (-N-) (c'est-à-dire le diamètre entre les points finaux (N - N) ) un diamètre plus petit que dans le point final (-O-) et un diamètre plus grand que dans le point (-P-).

**23.** Outil selon l'une quelconque des revendications 19 à 22, caractérisé en ce que, vue en coupe longitudinale la surface (45) se présente au moins particulièrement en forme fondamentale
- du chiffre arabe "2" -
sans trait transversal en bas.

**24.** Outil selon l'une quelconque des revendications 19 à 22, caractérisé en ce que, vue en coupe longitudinale, la surface (45) se présente au moins particulièrement en forme fondamentale
- du chiffre arabe "1" -.

**25.** Outil selon l'une quelconque des revendications 19 à 24, caractérisé en ce que, vu en coupe longitudinale, le segment de surface (45b) -au moins dans sa partie inférieure- est prévue en tant que surface de pression pour la languette de verrouillage (17) respective ou bien pour son flanc de verrouillage (21), la surface de pression partant d'une limite supérieure s'étend au moins partiellement vers le bas.

**26.** Outil selon l'une quelconque des revendications 19 à 25, caractérisé en ce que la gorge est espacé vers le haut, vers le côté bas de la pièce d'actionnement (côté bas (49) du sceau (48), pour permettre la conversion relative des languettes de verrouillage (17) vers l'intérieur ainsi que le fonctionnement du côté bas de la pièce d'actionnement (côté bas (49) du sceau (48)), et pour permettre particulièrement l'installation d'une pièce d'étanchéité (un moyen d'étanchéité, (p.ex. 8)) ou d'un produit d'étanchéité (compound) dans le bouchon inviolable (1).

Fig. 1

Fig. 2

Fig. 3

Fig. 4

EP 0 270 621 B1

Fig. 5

Fig. 6

Fig. 7

Fig. 8

Fig. 9

34

Fig.10

Fig. 11

Fig.12

# EP 0 270 621 B1

## Fig.13

## Fig.14

## Fig.15